# EUROPEAN PATENT SPECIFICATION

(11) **EP 4 648 511 B1**
(45) Date of publication and mention of the grant of the patent: **25.11.2026**
(21) Application number: 23923828.0
(22) Date of filing: 05.12.2023
(51) Int. Cl.: H04W 72/115, H04L 5/00, H04W 72/1268, H04W 72/23

(54) **COMMUNICATION METHOD AND COMMUNICATION APPARATUS**
KOMMUNIKATIONSVERFAHREN UND KOMMUNIKATIONSVORRICHTUNG
PROCÉDÉ DE COMMUNICATION ET APPAREIL DE COMMUNICATION

(30) Priority: 25.02.2023 CN 202310208067; 07.04.2023 CN 202310394655
(43) Date of publication of application: 12.11.2025
(73) Proprietor: Huawei Technologies Co., Ltd., Shenzhen, Guangdong 518129 (CN)
(72) Inventor: PANG, Xu, Shenzhen, Guangdong 518129 (CN); XU, Rui, Shenzhen, Guangdong 518129 (CN); CHEN, Erkai, Shenzhen, Guangdong 518129 (CN); QIN, Yi, Shenzhen, Guangdong 518129 (CN)
(74) Representative: Maiwald GmbH
(86) International application number: PCT/CN2023/136278
(87) International publication number: WO 2024/174665

(56) References cited:
- CN-A- 111 770 576
- CN-A- 113 632 561
- CN-A- 114 616 889
- CN-A- 114 765 863
- US-A1- 2021 144 743
- BRIAN CLASSON ET AL: "XR-specific capacity enhancements", 3GPP DRAFT; R1-2300070; TYPE OTHER; NR_XR_ENH-CORE 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Athens, GR; 20230227 - 20230303, 17 February 2023 (2023-02-17), XP052247223
- PETER GAAL ET AL: "Capacity enhancement techniques for XR", 3GPP DRAFT; R1-2212135; TYPE DISCUSSION; FS_NR_XR_ENH 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Toulouse, FR; 20221114 - 20221118, 5 November 2022 (2022-11-05), XP052222698

## Description

This application claims priority to Chinese Patent Application No. 202310208067.3, filed with the China National Intellectual Property Administration on February 25, 2023 and entitled "COMMUNICATION METHOD AND COMMUNICATION APPARATUS", and claims priority to Chinese Patent Application No. 202310394655.0, filed with the China National Intellectual Property Administration on April 7, 2023 and entitled "COMMUNICATION METHOD AND COMMUNICATION APPARATUS".

### TECHNICAL FIELD

Embodiments of this application relate to the communication field, and more specifically, to a communication method, a terminal and a computer-readable storage medium.

### BACKGROUND

With continuous development of a communication system, a data transmission delay is continuously reduced, and a transmission capacity is increasingly large. Some multimedia services that have high real-time performance and a large data capacity requirement, for example, video transmission, cloud gaming, extended reality (extended reality, XR), and the tactile Internet, gradually penetrate into a 5th generation (5th generation, 5G) communication system. XR includes virtual reality (virtual reality, VR) and augmented reality (augmented reality, AR).

For example, when a terminal device performs uplink transmission in a configured grant (configured grant, CG) periodicity, resources configured by a base station may not be fully used, causing a resource waste and improving system resource utilization.
Document BRIAN CLASSON ET AL: "XR-specific capacity enhancements",3GPP DRAFT; R1-2300070 represents an example of the prior art.

### SUMMARY

The invention is defined by the appended independent claims and further embodiments are described by the dependent claims.

Embodiments of this application provide a communication method, a terminal and a computer-readable storage medium, to reduce a resource waste and improve system resource utilization,

According to a first aspect, a communication method is provided. The method may be performed by a terminal device, or may be performed by a component (for example, a chip or a circuit) of the terminal device. This is not limited. For ease of description, an example in which the method is performed by the terminal device is used below for description.

The method may include: receiving first configuration information, where the first configuration information indicates M CG physical uplink shared channels (physical uplink share channel, PUSCH) in a first CG periodicity, the M CG PUSCHs include a first CG PUSCH and a second CG PUSCH, the first CG PUSCH is located before the second CG PUSCH in time domain, a time domain resource size of the second CG PUSCH is smaller than a time domain resource size of the first CG PUSCH, and M is an integer greater than or equal to 2; and sending data on N CG PUSCHs, where N is a positive integer less than or equal to M.

Based on the foregoing technical solution, a plurality of CG PUSCH resources are configured in a CG periodicity, and a time domain resource of a later CG PUSCH in time domain is smaller than a time domain resource of an earlier CG PUSCH. In other words, time domain resources of the plurality of PUSCHs in the CG periodicity correspondingly show a monotonically non-increasing trend. Therefore, even if the terminal device does not use all of the plurality of CG PUSCHs for uplink transmission, and a network device does not allocate, to another terminal device in a timely manner, CG PUSCH resources that are not used by the terminal device, a CG PUSCH resource waste is reduced as much as possible and system resource utilization is improved.

With reference to the first aspect, in some implementations of the first aspect, the first configuration information is carried in radio resource control (radio resource control, RRC) or downlink control information (downlink control information, DCI).

With reference to the first aspect, in some implementations of the first aspect, a frequency domain resource of the first CG PUSCH is different from a frequency domain resource of the second CG PUSCH.

With reference to the first aspect, in some implementations of the first aspect, a frequency domain resource size of the second CG PUSCH is smaller than a frequency domain resource size of the first CG PUSCH.

Based on the foregoing technical solution, a frequency domain resource of a later CG PUSCH in time domain is limited to be smaller than a frequency domain resource of an earlier CG PUSCH. In other words, frequency domain resources of the plurality of CG PUSCHs in the CG periodicity correspondingly show a monotonically non-increasing trend. Therefore, even if the terminal device does not use all of the plurality of CG PUSCHs for uplink transmission, and the network device does not allocate, to another terminal device in a timely manner, CG PUSCH resources that are not used by the terminal device, a CG PUSCH resource waste is reduced as much as possible and system resource utilization is improved.

With reference to the first aspect, in some implementations of the first aspect, the first configuration information includes M pieces of indication information, the M pieces of indication information are in one-to-one correspondence with the M CG PUSCHs, the M pieces of indication information include first indication information and second indication information, the first indication information indicates the frequency domain resource size of the first CG PUSCH, and the second indication information indicates the frequency domain resource size of the second CG PUSCH.

Based on the foregoing technical solution, the M pieces of indication information are received, and the M pieces of indication information respectively correspond to the M CG PUSCHs, to ensure that a frequency domain resource size of each CG PUSCH configured by the network device is indicated. In this way, adaptability is better, and completeness is greater.

With reference to the first aspect, in some implementations of the first aspect, the M CG PUSCHs further include a third CG PUSCH, the third CG PUSCH is located before the second CG PUSCH in time domain, and a frequency domain resource size of the third CG PUSCH is equal to the frequency domain resource size of the first CG PUSCH.

Based on the foregoing technical solution, the frequency domain resource size of the first CG PUSCH and the frequency domain resource size of the third CG PUSCH are the same, and both are larger than the frequency domain resource size of the second CG PUSCH. This ensures that the frequency domain resource of the later CG PUSCH in time domain is smaller than the frequency domain resource of the earlier CG PUSCH, to reduce a CG PUSCH resource waste as much as possible and improve system resource utilization.

Optionally, the first configuration may include thirteenth indication information, and the thirteenth indication information indicates frequency domain resource sizes of the M CG PUSCHs such as a frequency domain resource size of the first CG PUSCH or a frequency domain resource size of the second CG PUSCH.

Optionally, the M CG PUSCHs further include the third CG PUSCH, the third CG PUSCH is located before the second CG PUSCH in time domain, and the frequency domain resource size of the third CG PUSCH is equal to the frequency domain resource size of the first CG PUSCH.

Based on the foregoing solution, the configuration information carries one piece of indication information to indicate the frequency domain resource sizes of the M CG PUSCHs. Compared with the M pieces of indication information, signaling overheads can be reduced.

With reference to the first aspect, in some implementations of the first aspect, a difference between the frequency domain resource size of the first CG PUSCH and the frequency domain resource size of the second CG PUSCH is an integer multiple of a first step value; and the first configuration information further indicates the frequency domain resource size of the first CG PUSCH.

Based on the foregoing technical solution, a difference between frequency domain resource sizes of the plurality of CG PUSCHs is configured based on an integer multiple of the first step value. Compared with a case in which the frequency domain resource sizes of the plurality of CG PUSCHs are directly indicated, in this implementation, signaling overheads can be reduced. In addition, it is ensured that the frequency domain resource of the later CG PUSCH in time domain is smaller than the frequency domain resource of the earlier CG PUSCH, to reduce a CG PUSCH resource waste as much as possible and improve system resource utilization.

With reference to the first aspect, in some implementations of the first aspect, the first configuration information further indicates the first step value; or the first step value is predefined; or the method further includes: receiving third indication information, where the third indication information indicates the first step value.

With reference to the first aspect, in some implementations of the first aspect, the first configuration information includes Q pieces of indication information, the Q pieces of indication information include fourth indication information and fifth indication information, the fourth indication information indicates the frequency domain resource size of the first CG PUSCH, the fifth indication information indicates the frequency domain resource size of the second CG PUSCH, and Q is an integer greater than or equal to 2 and less than or equal to M; and
the M CG PUSCHs further include a fourth CG PUSCH, the fourth CG PUSCH is located between the first CG PUSCH and the second CG PUSCH in time domain, and the first configuration information further indicates that frequency domain resource sizes of all CG PUSCHs located before the fourth CG PUSCH in time domain are the same as the frequency domain resource size of the first CG PUSCH, and frequency domain resource sizes of all CG PUSCHs located after the fourth CG PUSCH in time domain are the same as the frequency domain resource size of the second CG PUSCH.

Based on the foregoing technical solution, the Q pieces of indication information are received, so that frequency domain resource sizes of a plurality of CG PUSCHs before the fourth CG PUSCH are the same, and frequency domain resource sizes of a plurality of CG PUSCHs after the fourth CG PUSCH are the same. Compared with a case in which the frequency domain resource sizes of the plurality of CG PUSCHs are directly indicated, in this implementation, signaling overheads can be reduced. In addition, it is ensured that the frequency domain resource of the later CG PUSCH in time domain is smaller than the frequency domain resource of the earlier CG PUSCH, to reduce a CG PUSCH resource waste as much as possible and improve system resource utilization.

With reference to the first aspect, in some implementations of the first aspect, a frequency domain resource size of the fourth CG PUSCH is the same as the frequency domain resource size of the first CG PUSCH, or a frequency domain resource size of the fourth CG PUSCH is the same as the frequency domain resource size of the second CG PUSCH.

Optionally, the first configuration may include one piece of indication information, and the indication information indicates frequency domain resource sizes of the M CG PUSCHs such as the frequency domain resource size of the first CG PUSCH and the frequency domain resource size of the second CG PUSCH.

Optionally, the M CG PUSCHs further include the fourth CG PUSCH, the fourth CG PUSCH is located between the first CG PUSCH and the second CG PUSCH in time domain, and the first configuration information further indicates that the frequency domain resource sizes of all the CG PUSCHs located before the fourth CG PUSCH in time domain are the same as the frequency domain resource size of the first CG PUSCH, and the frequency domain resource sizes of all the CG PUSCHs located after the fourth CG PUSCH in time domain are the same as the frequency domain resource size of the second CG PUSCH.

Based on the foregoing solution, the configuration information carries one piece of indication information to indicate the frequency domain resource sizes of the M CG PUSCHs. Compared with the M pieces of indication information, signaling overheads can be reduced.

With reference to the first aspect, in some implementations of the first aspect, the first configuration information further indicates a position of the fourth CG PUSCH, or a position of the fourth CG PUSCH is predefined.

With reference to the first aspect, in some implementations of the first aspect, the first configuration information includes sixth indication information, and the sixth indication information indicates the frequency domain resource size of the first CG PUSCH; and the M CG PUSCHs further include a fifth CG PUSCH, the fifth CG PUSCH is located between the first CG PUSCH and the second CG PUSCH in time domain, and the first configuration information further indicates that frequency domain resource sizes of all CG PUSCHs located before the fifth CG PUSCH in time domain are the same as the frequency domain resource size of the first CG PUSCH, and a difference between frequency domain resource sizes of all CG PUSCHs located after the fifth CG PUSCH in time domain is an integer multiple of a second step value.

Based on the foregoing technical solution, the sixth indication information is received, so that a difference between frequency domain resource sizes of a plurality of CG PUSCHs after the fifth CG PUSCH is configured based on an integer multiple of the second step value. Compared with a case in which the frequency domain resource sizes of the plurality of CG PUSCHs are directly indicated, in this implementation, signaling overheads can be reduced. In addition, it is ensured that the frequency domain resource of the later CG PUSCH in time domain is smaller than the frequency domain resource of the earlier CG PUSCH, to reduce a CG PUSCH resource waste as much as possible and improve system resource utilization.

With reference to the first aspect, in some implementations of the first aspect, the first configuration information further indicates the second step value; or the second step value is predefined; or the method further includes: receiving seventh indication information, where the seventh indication information indicates the second step value.

With reference to the first aspect, in some implementations of the first aspect, the first configuration information further indicates a position of the fifth CG PUSCH, or a position of the fifth CG PUSCH is predefined.

Optionally, the first configuration information includes eighth indication information, and the eighth indication information indicates time domain resource sizes of the M CG PUSCHs such as the time domain resource size of the first CG PUSCH and the time domain resource size of the second CG PUSCH.

The eighth indication information may be one or m pieces of indication information, and m is greater than 0 and less than or equal to M.

Based on the foregoing solution, the configuration information carries one piece of indication information to indicate the time domain resource sizes of the M CG PUSCHs. Compared with the M pieces of indication information, signaling overheads can be reduced.

With reference to the first aspect, in some implementations of the first aspect, a difference between the time domain resource size of the first CG PUSCH and the time domain resource size of the second CG PUSCH is an integer multiple of a third step value; and the first configuration information further indicates the time domain resource size of the first CG PUSCH.

With reference to the first aspect, in some implementations of the first aspect, the first configuration information is further used to configure a third step value; or the third step value is predefined.

With reference to the first aspect, in some implementations of the first aspect, ninth indication information is received. The ninth indication information indicates the third step value.

With reference to the first aspect, in some implementations of the first aspect, the first configuration information includes tenth indication information, and the tenth indication information indicates time domain resource sizes of the M CG PUSCHs.

The tenth indication information may be one or m pieces of indication information, and m is greater than 0 and less than or equal to M.

The M CG PUSCHs further include a sixth CG PUSCH, the sixth CG PUSCH is located between the first CG PUSCH and the second CG PUSCH in time domain, and the first configuration information further indicates that time domain resource sizes of all CG PUSCHs located before the sixth CG PUSCH in time domain are the same as the time domain resource size of the first CG PUSCH, and time domain resource sizes of all CG PUSCHs located after the sixth CG PUSCH in time domain are the same as the time domain resource size of the second CG PUSCH.

With reference to the first aspect, in some implementations of the first aspect, a time domain resource size of the sixth CG PUSCH is the same as the time domain resource size of the first CG PUSCH, or a time domain resource size of the sixth CG PUSCH is the same as the time domain resource size of the second CG PUSCH.

It should be noted that the sixth CG PUSCH and the fourth CG PUSCH may be a same CG PUSCH, or may be different CG PUSCHs. This is not limited in this application.

Based on the foregoing solution, the configuration information carries one piece of indication information to indicate the time domain resource sizes of the M CG PUSCHs. Compared with the M pieces of indication information, signaling overheads can be reduced.

With reference to the first aspect, in some implementations of the first aspect, the first configuration information includes eleventh indication information, and the eleventh indication information indicates the time domain resource size of the first CG PUSCH; and the M CG PUSCHs further include a seventh CG PUSCH, the seventh CG PUSCH is located between the first CG PUSCH and the second CG PUSCH in time domain, and the first configuration information further indicates that time domain resource sizes of all CG PUSCHs located before the seventh CG PUSCH in time domain are the same as the time domain resource size of the first CG PUSCH, and a difference between time domain resource sizes of all CG PUSCHs located after the seventh CG PUSCH in time domain is an integer multiple of the fourth step value.

It should be noted that the seventh CG PUSCH and the fifth CG PUSCH may be a same CG PUSCH, or may be different CG PUSCHs. This is not limited in this application.

With reference to the first aspect, in some implementations of the first aspect, the first configuration information further indicates the fourth step value; or the fourth step value is predefined.

With reference to the first aspect, in some implementations of the first aspect, twelfth indication information is received. The twelfth indication information indicates the fourth step value.

According to a second aspect, a communication method is provided, applied to a network device. The method may be performed by the network device, or may be performed by a component (for example, a chip or a circuit) of the network device. This is not limited. For ease of description, an example in which the method is performed by the network device is used below for description.

The method may include: sending first configuration information, where the first configuration information indicates M CG PUSCHs in a first CG periodicity, the M CG PUSCHs include a first CG PUSCH and a second CG PUSCH, the first CG PUSCH is located before the second CG PUSCH in time domain, a time domain resource size of the second CG PUSCH is smaller than a time domain resource size of the first CG PUSCH, and M is an integer greater than or equal to 2; and receiving data on N CG PUSCHs, where N is a positive integer less than or equal to M.

Based on the foregoing technical solution, a plurality of CG PUSCH resources are configured in a CG periodicity, and a time domain resource of a later CG PUSCH in time domain is smaller than a time domain resource of an earlier CG PUSCH. In other words, time domain resources of the plurality of CG PUSCHs in the CG periodicity correspondingly show a monotonically non-increasing trend. Therefore, even if a terminal device does not use all of the plurality of CG PUSCHs for uplink transmission, and the network device does not allocate, to another terminal device in a timely manner, CG PUSCH resources that are not used by the terminal device, a CG PUSCH resource waste is reduced as much as possible and system resource utilization is improved.

With reference to the second aspect, in some implementations of the second aspect, the first configuration information is carried in RRC or DCI.

With reference to the second aspect, in some implementations of the second aspect, a frequency domain resource of the first CG PUSCH is different from a frequency domain resource of the second CG PUSCH.

With reference to the second aspect, in some implementations of the second aspect, a frequency domain resource size of the second CG PUSCH is smaller than a frequency domain resource size of the first CG PUSCH.

With reference to the second aspect, in some implementations of the second aspect, the first configuration information includes M pieces of indication information, the M pieces of indication information are in one-to-one correspondence with the M CG PUSCHs, the M pieces of indication information include first indication information and second indication information, the first indication information indicates the frequency domain resource size of the first CG PUSCH, and the second indication information indicates the frequency domain resource size of the second CG PUSCH.

With reference to the second aspect, in some implementations of the second aspect, the M CG PUSCHs further include a third CG PUSCH, the third CG PUSCH is located before the second CG PUSCH in time domain, and a frequency domain resource size of the third CG PUSCH is equal to the frequency domain resource size of the first CG PUSCH.

Optionally, the first configuration may include thirteenth indication information, and the thirteenth indication information indicates frequency domain resource sizes of the M CG PUSCHs such as a frequency domain resource size of the first CG PUSCH or a frequency domain resource size of the second CG PUSCH.

Optionally, the M CG PUSCHs further include the third CG PUSCH, the third CG PUSCH is located before the second CG PUSCH in time domain, and the frequency domain resource size of the third CG PUSCH is equal to the frequency domain resource size of the first CG PUSCH.

With reference to the second aspect, in some implementations of the second aspect, a difference between the frequency domain resource size of the first CG PUSCH and the frequency domain resource size of the second CG PUSCH is an integer multiple of a first step value; and the first configuration information further indicates the frequency domain resource size of the first CG PUSCH.

With reference to the second aspect, in some implementations of the second aspect, the first configuration information further indicates the first step value; or the first step value is predefined; or the method further includes: sending third indication information, where the third indication information indicates the first step value.

With reference to the second aspect, in some implementations of the second aspect, the first configuration information includes Q pieces of indication information, the Q pieces of indication information include fourth indication information and fifth indication information, the fourth indication information indicates the frequency domain resource size of the first CG PUSCH, the fifth indication information indicates the frequency domain resource size of the second CG PUSCH, and Q is an integer greater than or equal to 2 and less than or equal to M; and
the M CG PUSCHs further include a fourth CG PUSCH, the fourth CG PUSCH is located between the first CG PUSCH and the second CG PUSCH in time domain, and the first configuration information further indicates that frequency domain resource sizes of all CG PUSCHs located before the fourth CG PUSCH in time domain are the same as the frequency domain resource size of the first CG PUSCH, and frequency domain resource sizes of all CG PUSCHs located after the fourth CG PUSCH in time domain are the same as the frequency domain resource size of the second CG PUSCH.

With reference to the second aspect, in some implementations of the second aspect, a frequency domain resource size of the fourth CG PUSCH is the same as the frequency domain resource size of the first CG PUSCH, or a frequency domain resource size of the fourth CG PUSCH is the same as the frequency domain resource size of the second CG PUSCH.

Optionally, the first configuration may include one piece of indication information, and the indication information indicates frequency domain resource sizes of the M CG PUSCHs such as the frequency domain resource size of the first CG PUSCH and the frequency domain resource size of the second CG PUSCH.

Optionally, the M CG PUSCHs further include the fourth CG PUSCH, the fourth CG PUSCH is located between the first CG PUSCH and the second CG PUSCH in time domain, and the first configuration information further indicates that the frequency domain resource sizes of all the CG PUSCHs located before the fourth CG PUSCH in time domain are the same as the frequency domain resource size of the first CG PUSCH, and the frequency domain resource sizes of all the CG PUSCHs located after the fourth CG PUSCH in time domain are the same as the frequency domain resource size of the second CG PUSCH.

With reference to the second aspect, in some implementations of the second aspect, the first configuration information further indicates a position of the fourth CG PUSCH, or a position of the fourth CG PUSCH is predefined.

With reference to the second aspect, in some implementations of the second aspect, the first configuration information includes sixth indication information, and the sixth indication information indicates the frequency domain resource size of the first CG PUSCH; and the M CG PUSCHs further include a fifth CG PUSCH, and the first configuration information further indicates that frequency domain resource sizes of all CG PUSCHs located before the fifth CG PUSCH in time domain are the same as the frequency domain resource size of the first CG PUSCH, and a difference between frequency domain resource sizes of all CG PUSCHs located after the fifth CG PUSCH in time domain is an integer multiple of a second step value.

With reference to the second aspect, in some implementations of the second aspect, the first configuration information further indicates the second step value; or the second step value is predefined; or the method further includes: sending seventh indication information, where the seventh indication information indicates the second step value.

With reference to the second aspect, in some implementations of the second aspect, the first configuration information further indicates a position of the fifth CG PUSCH, or a position of the fifth CG PUSCH is predefined.

Optionally, the first configuration information includes eighth indication information, and the eighth indication information indicates time domain resource sizes of the M CG PUSCHs such as the time domain resource size of the first CG PUSCH and the time domain resource size of the second CG PUSCH.

The eighth indication information may be one or m pieces of indication information, and m is greater than 0 and less than or equal to M.

Based on the foregoing solution, the configuration information carries one piece of indication information to indicate the time domain resource sizes of the M CG PUSCHs. Compared with the m pieces of indication information, signaling overheads can be reduced.

With reference to the second aspect, in some implementations of the second aspect, the M CG PUSCHs further include a third CG PUSCH, the third CG PUSCH is located before the second CG PUSCH in time domain, and a time domain resource size of the third CG PUSCH is equal to the time domain resource size of the first CG PUSCH.

With reference to the second aspect, in some implementations of the second aspect, a difference between the time domain resource size of the first CG PUSCH and the time domain resource size of the second CG PUSCH is an integer multiple of a third step value; and the first configuration information further indicates the time domain resource size of the first CG PUSCH.

With reference to the second aspect, in some implementations of the second aspect, the first configuration information is further used to configure a third step value; or the third step value is predefined.

With reference to the second aspect, in some implementations of the second aspect, ninth indication information is sent. The ninth indication information indicates the third step value.

With reference to the second aspect, in some implementations of the second aspect, the first configuration information includes tenth indication information, and the tenth indication information indicates time domain resource sizes of the M CG PUSCHs.

The tenth indication information may be one or m pieces of indication information, and m is greater than 0 and less than or equal to M.

The M CG PUSCHs further include a sixth CG PUSCH, the sixth CG PUSCH is located between the first CG PUSCH and the second CG PUSCH in time domain, and the first configuration information further indicates that time domain resource sizes of all CG PUSCHs located before the sixth CG PUSCH in time domain are the same as the time domain resource size of the first CG PUSCH, and time domain resource sizes of all CG PUSCHs located after the sixth CG PUSCH in time domain are the same as the time domain resource size of the second CG PUSCH.

With reference to the second aspect, in some implementations of the second aspect, a time domain resource size of the sixth CG PUSCH is the same as the time domain resource size of the first CG PUSCH, or a time domain resource size of the sixth CG PUSCH is the same as the time domain resource size of the second CG PUSCH.

With reference to the second aspect, in some implementations of the second aspect, the first configuration information includes eleventh indication information, and the eleventh indication information indicates the time domain resource size of the first CG PUSCH; and the M CG PUSCHs further include a seventh CG PUSCH, the seventh CG PUSCH is located between the first CG PUSCH and the second CG PUSCH in time domain, and the first configuration information further indicates that time domain resource sizes of all CG PUSCHs located before the seventh CG PUSCH in time domain are the same as the time domain resource size of the first CG PUSCH, and a difference between time domain resource sizes of all CG PUSCHs located after the seventh CG PUSCH in time domain is an integer multiple of the fourth step value.

With reference to the second aspect, in some implementations of the second aspect, the first configuration information further indicates the fourth step value; or the fourth step value is predefined.

With reference to the second aspect, in some implementations of the second aspect, twelfth indication information is received. The twelfth indication information indicates the fourth step value.

For beneficial effect of the second aspect and some implementations of the second aspect, correspondingly refer to related descriptions of the first aspect. Details are not described herein again.

According to a third aspect, a communication method is provided. The method may be performed by a terminal device, or may be performed by a component (for example, a chip or a circuit) of the terminal device. This is not limited. For ease of description, an example in which the method is performed by the terminal device is used below for description.

The method may include: receiving first configuration information, where the first configuration information indicates M CG PUSCHs in a first CG periodicity, the M CG PUSCHs include a first CG PUSCH and a second CG PUSCH, the first CG PUSCH is located before the second CG PUSCH in time domain, a frequency domain resource of the first CG PUSCH is different from a time domain resource of the second CG PUSCH, and M is an integer greater than 1; and sending data on N CG PUSCHs, where N is a positive integer less than or equal to M.

Based on the foregoing technical solution, a plurality of CG PUSCH resources are configured in a CG periodicity, and a frequency domain resource of a later CG PUSCH in time domain is smaller than a frequency domain resource of an earlier CG PUSCH. In other words, frequency domain resources of the plurality of PUSCHs in the CG periodicity correspondingly show a monotonically non-increasing trend. Therefore, even if the terminal device does not use all of the plurality of CG PUSCHs for uplink transmission, and a network device does not allocate, to another terminal device in a timely manner, CG PUSCH resources that are not used by the terminal device, a CG PUSCH resource waste is reduced as much as possible and system resource utilization is improved.

With reference to the third aspect, in some implementations of the third aspect, the first configuration information is carried in RRC or DCI.

With reference to the third aspect, in some implementations of the third aspect, a frequency domain resource size of the second CG PUSCH is smaller than a frequency domain resource size of the first CG PUSCH.

With reference to the third aspect, in some implementations of the third aspect, the first configuration information includes M pieces of indication information, the M pieces of indication information are in one-to-one correspondence with the M CG PUSCHs, the M pieces of indication information include first indication information and second indication information, the first indication information indicates the frequency domain resource size of the first CG PUSCH, and the second indication information indicates the frequency domain resource size of the second CG PUSCH.

With reference to the third aspect, in some implementations of the third aspect, the M CG PUSCHs further include a third CG PUSCH, the third CG PUSCH is located before the second CG PUSCH in time domain, and a frequency domain resource size of the third CG PUSCH is equal to the frequency domain resource size of the first CG PUSCH.

Optionally, the first configuration may include thirteenth indication information, and the thirteenth indication information indicates frequency domain resource sizes of the M CG PUSCHs such as a frequency domain resource size of the first CG PUSCH or a frequency domain resource size of the second CG PUSCH.

Optionally, the M CG PUSCHs further include the third CG PUSCH, the third CG PUSCH is located before the second CG PUSCH in time domain, and the frequency domain resource size of the third CG PUSCH is equal to the frequency domain resource size of the first CG PUSCH.

With reference to the third aspect, in some implementations of the third aspect, a difference between the frequency domain resource size of the first CG PUSCH and the frequency domain resource size of the second CG PUSCH is an integer multiple of a first step value; and the first configuration information further indicates the frequency domain resource size of the first CG PUSCH.

With reference to the third aspect, in some implementations of the third aspect, the first configuration information further indicates the first step value; or the first step value is predefined; or the method further includes: receiving third indication information, where the third indication information indicates the first step value.

With reference to the third aspect, in some implementations of the third aspect, the first configuration information includes Q pieces of indication information, the Q pieces of indication information include fourth indication information and fifth indication information, the fourth indication information indicates the frequency domain resource size of the first CG PUSCH, the fifth indication information indicates the frequency domain resource size of the second CG PUSCH, and Q is an integer greater than or equal to 2 and less than or equal to M; and
the M CG PUSCHs further include a fourth CG PUSCH, the fourth CG PUSCH is located between the first CG PUSCH and the second CG PUSCH in time domain, and the first configuration information further indicates that frequency domain resource sizes of all CG PUSCHs located before the fourth CG PUSCH in time domain are the same as the frequency domain resource size of the first CG PUSCH, and frequency domain resource sizes of all CG PUSCHs located after the fourth CG PUSCH in time domain are the same as the frequency domain resource size of the second CG PUSCH.

With reference to the third aspect, in some implementations of the third aspect, a frequency domain resource size of the fourth CG PUSCH is the same as the frequency domain resource size of the first CG PUSCH, or a frequency domain resource size of the fourth CG PUSCH is the same as the frequency domain resource size of the second CG PUSCH.

Optionally, the first configuration may include one piece of indication information, and the indication information indicates frequency domain resource sizes of the M CG PUSCHs such as the frequency domain resource size of the first CG PUSCH and the frequency domain resource size of the second CG PUSCH.

Optionally, the M CG PUSCHs further include the fourth CG PUSCH, the fourth CG PUSCH is located between the first CG PUSCH and the second CG PUSCH in time domain, and the first configuration information further indicates that the frequency domain resource sizes of all the CG PUSCHs located before the fourth CG PUSCH in time domain are the same as the frequency domain resource size of the first CG PUSCH, and the frequency domain resource sizes of all the CG PUSCHs located after the fourth CG PUSCH in time domain are the same as the frequency domain resource size of the second CG PUSCH.

Based on the foregoing solution, the configuration information carries one piece of indication information to indicate the frequency domain resource sizes of the M CG PUSCHs. Compared with the M pieces of indication information, signaling overheads can be reduced.

With reference to the third aspect, in some implementations of the third aspect, the first configuration information further indicates a position of the fourth CG PUSCH, or a position of the fourth CG PUSCH is predefined.

With reference to the third aspect, in some implementations of the third aspect, the first configuration information includes sixth indication information, and the sixth indication information indicates the frequency domain resource size of the first CG PUSCH; and the M CG PUSCHs further include a fifth CG PUSCH, the fifth CG PUSCH is located between the first CG PUSCH and the second CG PUSCH in time domain, and the first configuration information further indicates that frequency domain resource sizes of all CG PUSCHs located before the fifth CG PUSCH in time domain are the same as the frequency domain resource size of the first CG PUSCH, and a difference between frequency domain resource sizes of all CG PUSCHs located after the fifth CG PUSCH in time domain is an integer multiple of a second step value.

With reference to the third aspect, in some implementations of the third aspect, the first configuration information further indicates the second step value; or the second step value is predefined; or the method further includes: receiving seventh indication information, where the seventh indication information indicates the second step value.

With reference to the third aspect, in some implementations of the third aspect, the first configuration information further indicates a position of the fifth CG PUSCH, or a position of the fifth CG PUSCH is predefined.

With reference to the third aspect, in some implementations of the third aspect, a time domain resource size of the second CG PUSCH is smaller than a time domain resource size of the first CG PUSCH.

Optionally, the first configuration information includes eighth indication information, and the eighth indication information indicates time domain resource sizes of the M CG PUSCHs such as the time domain resource size of the first CG PUSCH and the time domain resource size of the second CG PUSCH.

The eighth indication information may be one or m pieces of indication information, and m is greater than 0 and less than or equal to M.

Based on the foregoing solution, the configuration information carries one piece of indication information to indicate the time domain resource sizes of the M CG PUSCHs. Compared with the m pieces of indication information, signaling overheads can be reduced.

With reference to the third aspect, in some implementations of the third aspect, a difference between the time domain resource size of the first CG PUSCH and the time domain resource size of the second CG PUSCH is an integer multiple of a third step value; and the first configuration information further indicates the time domain resource size of the first CG PUSCH.

With reference to the third aspect, in some implementations of the third aspect, the first configuration information is further used to configure a third step value; or the third step value is predefined.

With reference to the third aspect, in some implementations of the third aspect, ninth indication information is received. The ninth indication information indicates the third step value.

With reference to the third aspect, in some implementations of the third aspect, the first configuration information includes tenth indication information, and the tenth indication information indicates time domain resource sizes of the M CG PUSCHs.

The tenth indication information may be one or m pieces of indication information, and m is greater than 0 and less than or equal to M.

Optionally, the M CG PUSCHs further include a sixth CG PUSCH, the sixth CG PUSCH is located between the first CG PUSCH and the second CG PUSCH in time domain, and the first configuration information further indicates that time domain resource sizes of all CG PUSCHs located before the sixth CG PUSCH in time domain are the same as the time domain resource size of the first CG PUSCH, and time domain resource sizes of all CG PUSCHs located after the sixth CG PUSCH in time domain are the same as the time domain resource size of the second CG PUSCH.

With reference to the third aspect, in some implementations of the third aspect, the first configuration information includes eleventh indication information, and the eleventh indication information indicates the time domain resource size of the first CG PUSCH; and the M CG PUSCHs further include a seventh CG PUSCH, the seventh CG PUSCH is located between the first CG PUSCH and the second CG PUSCH in time domain, and the first configuration information further indicates that time domain resource sizes of all CG PUSCHs located before the seventh CG PUSCH in time domain are the same as the time domain resource size of the first CG PUSCH, and a difference between time domain resource sizes of all CG PUSCHs located after the seventh CG PUSCH in time domain is an integer multiple of the fourth step value.

With reference to the third aspect, in some implementations of the third aspect, the first configuration information further indicates the fourth step value; or the fourth step value is predefined.

With reference to the third aspect, in some implementations of the third aspect, twelfth indication information is received. The twelfth indication information indicates the fourth step value.

For beneficial effect of the third aspect and some implementations of the third aspect, correspondingly refer to related descriptions of the first aspect. Details are not described herein again.

According to a fourth aspect, a communication method is provided, applied to a network device. The method may be performed by the network device, or may be performed by a component (for example, a chip or a circuit) of the network device. This is not limited. For ease of description, an example in which the method is performed by the network device is used below for description.

The method may include: sending first configuration information, where the first configuration information indicates M configured grant CG PUSCHs in a first CG periodicity, the M CG PUSCHs include a first CG PUSCH and a second CG PUSCH, the first CG PUSCH is located before the second CG PUSCH in time domain, a frequency domain resource of the first CG PUSCH is different from a time domain resource of the second CG PUSCH, and M is an integer greater than 1; and receiving data on N CG PUSCHs, where N is a positive integer less than or equal to M.

Based on the foregoing technical solution, a plurality of CG PUSCH resources are configured in a CG periodicity, and a frequency domain resource of a later CG PUSCH in time domain is smaller than a frequency domain resource of an earlier CG PUSCH. In other words, frequency domain resources of the plurality of PUSCHs in the CG periodicity correspondingly show a monotonically non-increasing trend. Therefore, even if the terminal device does not use all of the plurality of CG PUSCHs for uplink transmission, and a network device does not allocate, to another terminal device in a timely manner, CG PUSCH resources that are not used by the terminal device, a CG PUSCH resource waste is reduced as much as possible and system resource utilization is improved.

With reference to the fourth aspect, in some implementations of the fourth aspect, the first configuration information is carried in RRC or DCI.

With reference to the fourth aspect, in some implementations of the fourth aspect, a frequency domain resource size of the second CG PUSCH is smaller than a frequency domain resource size of the first CG PUSCH.

With reference to the fourth aspect, in some implementations of the fourth aspect, the first configuration information includes M pieces of indication information, the M pieces of indication information are in one-to-one correspondence with the M CG PUSCHs, the M pieces of indication information include first indication information and second indication information, the first indication information indicates the frequency domain resource size of the first CG PUSCH, and the second indication information indicates the frequency domain resource size of the second CG PUSCH.

With reference to the fourth aspect, in some implementations of the fourth aspect, the M CG PUSCHs further include a third CG PUSCH, the third CG PUSCH is located before the second CG PUSCH in time domain, and a frequency domain resource size of the third CG PUSCH is equal to the frequency domain resource size of the first CG PUSCH.

Optionally, the first configuration may include thirteenth indication information, and the thirteenth indication information indicates frequency domain resource sizes of the M CG PUSCHs such as a frequency domain resource size of the first CG PUSCH or a frequency domain resource size of the second CG PUSCH.

Optionally, the M CG PUSCHs further include the third CG PUSCH, the third CG PUSCH is located before the second CG PUSCH in time domain, and the frequency domain resource size of the third CG PUSCH is equal to the frequency domain resource size of the first CG PUSCH.

With reference to the fourth aspect, in some implementations of the fourth aspect, a difference between the frequency domain resource size of the first CG PUSCH and the frequency domain resource size of the second CG PUSCH is an integer multiple of a first step value; and the first configuration information further indicates the frequency domain resource size of the first CG PUSCH.

With reference to the fourth aspect, in some implementations of the fourth aspect, the first configuration information further indicates the first step value; or the first step value is predefined; or the method further includes: sending third indication information, where the third indication information indicates the first step value.

With reference to the fourth aspect, in some implementations of the fourth aspect, the first configuration information includes Q pieces of indication information, the Q pieces of indication information include fourth indication information and fifth indication information, the fourth indication information indicates the frequency domain resource size of the first CG PUSCH, the fifth indication information indicates the frequency domain resource size of the second CG PUSCH, and Q is an integer greater than or equal to 2 and less than or equal to M; and
the M CG PUSCHs further include a fourth CG PUSCH, the fourth CG PUSCH is located between the first CG PUSCH and the second CG PUSCH in time domain, and the first configuration information further indicates that frequency domain resource sizes of all CG PUSCHs located before the fourth CG PUSCH in time domain are the same as the frequency domain resource size of the first CG PUSCH, and frequency domain resource sizes of all CG PUSCHs located after the fourth CG PUSCH in time domain are the same as the frequency domain resource size of the second CG PUSCH.

Optionally, the first configuration may include one piece of indication information, and the indication information indicates frequency domain resource sizes of the M CG PUSCHs such as the frequency domain resource size of the first CG PUSCH and the frequency domain resource size of the second CG PUSCH.

Optionally, the M CG PUSCHs further include the fourth CG PUSCH, the fourth CG PUSCH is located between the first CG PUSCH and the second CG PUSCH in time domain, and the first configuration information further indicates that the frequency domain resource sizes of all the CG PUSCHs located before the fourth CG PUSCH in time domain are the same as the frequency domain resource size of the first CG PUSCH, and the frequency domain resource sizes of all the CG PUSCHs located after the fourth CG PUSCH in time domain are the same as the frequency domain resource size of the second CG PUSCH.

With reference to the fourth aspect, in some implementations of the fourth aspect, a frequency domain resource size of the fourth CG PUSCH is the same as the frequency domain resource size of the first CG PUSCH, or a frequency domain resource size of the fourth CG PUSCH is the same as the frequency domain resource size of the second CG PUSCH.

With reference to the fourth aspect, in some implementations of the fourth aspect, the first configuration information further indicates a position of the fourth CG PUSCH, or a position of the fourth CG PUSCH is predefined.

With reference to the fourth aspect, in some implementations of the fourth aspect, the first configuration information includes sixth indication information, and the sixth indication information indicates the frequency domain resource size of the first CG PUSCH; and the M CG PUSCHs further include a fifth CG PUSCH, and the first configuration information further indicates that frequency domain resource sizes of all CG PUSCHs located before the fifth CG PUSCH in time domain are the same as the frequency domain resource size of the first CG PUSCH, and a difference between frequency domain resource sizes of all CG PUSCHs located after the fifth CG PUSCH in time domain is an integer multiple of a second step value.

With reference to the fourth aspect, in some implementations of the fourth aspect, the first configuration information further indicates the second step value; or the second step value is predefined; or the method further includes: sending seventh indication information, where the seventh indication information indicates the second step value.

With reference to the fourth aspect, in some implementations of the fourth aspect, the first configuration information further indicates a position of the fifth CG PUSCH, or a position of the fifth CG PUSCH is predefined.

Optionally, the first configuration information includes eighth indication information, and the eighth indication information indicates time domain resource sizes of the M CG PUSCHs such as the time domain resource size of the first CG PUSCH and the time domain resource size of the second CG PUSCH.

The eighth indication information may be one or m pieces of indication information, and m is greater than 0 and less than or equal to M.

Optionally, the M CG PUSCHs further include the third CG PUSCH, the third CG PUSCH is located before the second CG PUSCH in time domain, and the time domain resource size of the third CG PUSCH is equal to the time domain resource size of the first CG PUSCH.

With reference to the fourth aspect, in some implementations of the fourth aspect, a difference between the time domain resource size of the first CG PUSCH and the time domain resource size of the second CG PUSCH is an integer multiple of a third step value; and the first configuration information further indicates the time domain resource size of the first CG PUSCH.

With reference to the fourth aspect, in some implementations of the fourth aspect, the first configuration information is further used to configure a third step value; or the third step value is predefined.

With reference to the fourth aspect, in some implementations of the fourth aspect, ninth indication information is sent. The ninth indication information indicates the third step value.

With reference to the fourth aspect, in some implementations of the fourth aspect, the first configuration information includes tenth indication information, and the tenth indication information indicates time domain resource sizes of the M CG PUSCHs.

The tenth indication information may be one or m pieces of indication information, and m is greater than 0 and less than or equal to M.

With reference to the fourth aspect, in some implementations of the fourth aspect, a time domain resource size of the sixth CG PUSCH is the same as the time domain resource size of the first CG PUSCH, or a time domain resource size of the sixth CG PUSCH is the same as the time domain resource size of the second CG PUSCH.

Optionally, the M CG PUSCHs further include a sixth CG PUSCH, the sixth CG PUSCH is located between the first CG PUSCH and the second CG PUSCH in time domain, and the first configuration information further indicates that time domain resource sizes of all CG PUSCHs located before the sixth CG PUSCH in time domain are the same as the time domain resource size of the first CG PUSCH, and time domain resource sizes of all CG PUSCHs located after the sixth CG PUSCH in time domain are the same as the time domain resource size of the second CG PUSCH.

With reference to the second aspect, in some implementations of the second aspect, the first configuration information includes eleventh indication information, and the eleventh indication information indicates the time domain resource size of the first CG PUSCH; and the M CG PUSCHs further include a seventh CG PUSCH, the seventh CG PUSCH is located between the first CG PUSCH and the second CG PUSCH in time domain, and the first configuration information further indicates that time domain resource sizes of all CG PUSCHs located before the seventh CG PUSCH in time domain are the same as the time domain resource size of the first CG PUSCH, and a difference between time domain resource sizes of all CG PUSCHs located after the seventh CG PUSCH in time domain is an integer multiple of the fourth step value.

With reference to the fourth aspect, in some implementations of the fourth aspect, the first configuration information further indicates the fourth step value; or the fourth step value is predefined.

With reference to the fourth aspect, in some implementations of the fourth aspect, twelfth indication information is received. The twelfth indication information indicates the fourth step value.

For beneficial effect of the fourth aspect and some implementations of the fourth aspect, correspondingly refer to related descriptions of the first aspect. Details are not described herein again.

According to a fifth aspect, a communication method is provided. The method may be performed by a terminal device, or may be performed by a component (for example, a chip or a circuit) of the terminal device. This is not limited. For ease of description, an example in which the method is performed by the terminal device is used below for description.

The method may include: receiving first configuration information. The first configuration information indicates M CG PUSCHs in a first CG periodicity, the M CG PUSCHs include a first CG PUSCH and a second CG PUSCH, the first CG PUSCH is located before the second CG PUSCH in time domain, a time domain resource size of the second CG PUSCH is smaller than a time domain resource size of the first CG PUSCH, and M is an integer greater than or equal to 2.

Based on the foregoing technical solution, a plurality of CG PUSCH resources are configured in a CG periodicity, and a time domain resource of a later CG PUSCH in time domain is smaller than a time domain resource of an earlier CG PUSCH. In other words, time domain resources of the plurality of PUSCHs in the CG periodicity correspondingly show a monotonically non-increasing trend. Compared with an existing CG PUSCH configuration manner, in this technical solution, a flexible configuration of the first configuration information on a network side is improved, and this is more applicable.

With reference to the fifth aspect, in some implementations of the fifth aspect, the first configuration information is carried in RRC or DCI.

With reference to the fifth aspect, in some implementations of the fifth aspect, data is sent on N CG PUSCHs. N is a positive integer less than or equal to M.

Based on the foregoing technical solution, a resource waste can be reduced. To be specific, even if the terminal device does not use all of the plurality of CG PUSCHs for uplink transmission, and a network device does not allocate, to another terminal device in a timely manner, CG PUSCH resources that are not used by the terminal device, a CG PUSCH resource waste is reduced as much as possible and system resource utilization is improved.

With reference to the fifth aspect, in some implementations of the fifth aspect, a frequency domain resource of the first CG PUSCH is different from a frequency domain resource of the second CG PUSCH.

With reference to the fifth aspect, in some implementations of the fifth aspect, a frequency domain resource size of the second CG PUSCH is smaller than a frequency domain resource size of the first CG PUSCH.

With reference to the fifth aspect, in some implementations of the fifth aspect, the first configuration information includes M pieces of indication information, the M pieces of indication information are in one-to-one correspondence with the M CG PUSCHs, the M pieces of indication information include first indication information and second indication information, the first indication information indicates the frequency domain resource size of the first CG PUSCH, and the second indication information indicates the frequency domain resource size of the second CG PUSCH.

With reference to the fifth aspect, in some implementations of the fifth aspect, the M CG PUSCHs further include a third CG PUSCH, the third CG PUSCH is located before the second CG PUSCH in time domain, and a frequency domain resource size of the third CG PUSCH is equal to the frequency domain resource size of the first CG PUSCH.

With reference to the fifth aspect, in some implementations of the fifth aspect, a difference between the frequency domain resource size of the first CG PUSCH and the frequency domain resource size of the second CG PUSCH is an integer multiple of a first step value; and the first configuration information further indicates the frequency domain resource size of the first CG PUSCH.

With reference to the fifth aspect, in some implementations of the fifth aspect, the first configuration information further indicates the first step value; or the first step value is predefined; or the method further includes: receiving third indication information, where the third indication information indicates the first step value.

With reference to the fifth aspect, in some implementations of the fifth aspect, the first configuration information includes Q pieces of indication information, the Q pieces of indication information include fourth indication information and fifth indication information, the fourth indication information indicates the frequency domain resource size of the first CG PUSCH, the fifth indication information indicates the frequency domain resource size of the second CG PUSCH, and Q is an integer greater than or equal to 2 and less than or equal to M; and the M CG PUSCHs further include the fourth CG PUSCH, the fourth CG PUSCH is located between the first CG PUSCH and the second CG PUSCH in time domain, and the first configuration information further indicates that frequency domain resource sizes of all CG PUSCHs located before the fourth CG PUSCH in time domain are the same as the frequency domain resource size of the first CG PUSCH, and frequency domain resource sizes of all CG PUSCHs located after the fourth CG PUSCH in time domain are the same as the frequency domain resource size of the second CG PUSCH.

With reference to the fifth aspect, in some implementations of the fifth aspect, a frequency domain resource size of the fourth CG PUSCH is the same as the frequency domain resource size of the first CG PUSCH, or a frequency domain resource size of the fourth CG PUSCH is the same as the frequency domain resource size of the second CG PUSCH.

With reference to the fifth aspect, in some implementations of the fifth aspect, the first configuration information further indicates a position of the fourth CG PUSCH, or a position of the fourth CG PUSCH is predefined.

With reference to the fifth aspect, in some implementations of the fifth aspect, the first configuration information includes sixth indication information, and the sixth indication information indicates the frequency domain resource size of the first CG PUSCH; and the M CG PUSCHs further include a fifth CG PUSCH, the fifth CG PUSCH is located between the first CG PUSCH and the second CG PUSCH in time domain, and the first configuration information further indicates that frequency domain resource sizes of all CG PUSCHs located before the fifth CG PUSCH in time domain are the same as the frequency domain resource size of the first CG PUSCH, and a difference between frequency domain resource sizes of all CG PUSCHs located after the fifth CG PUSCH in time domain is an integer multiple of a second step value.

With reference to the fifth aspect, in some implementations of the fifth aspect, the first configuration information further indicates the second step value; or the second step value is predefined; or the method further includes: receiving seventh indication information, where the seventh indication information indicates the second step value.

With reference to the fifth aspect, in some implementations of the fifth aspect, the first configuration information further indicates a position of the fifth CG PUSCH, or a position of the fifth CG PUSCH is predefined.

For beneficial effect of the fifth aspect and some implementations of the fifth aspect, correspondingly refer to related descriptions of the first aspect. Details are not described herein again.

According to a sixth aspect, a communication method is provided, applied to a network device. The method may be performed by the network device, or may be performed by a component (for example, a chip or a circuit) of the network device. This is not limited. For ease of description, an example in which the method is performed by the network device is used below for description.

The method may include: determining first configuration information, where the first configuration information indicates M CG PUSCHs in a first CG periodicity, the M CG PUSCHs include a first CG PUSCH and a second CG PUSCH, the first CG PUSCH is located before the second CG PUSCH in time domain, a time domain resource size of the second CG PUSCH is smaller than a time domain resource size of the first CG PUSCH, and M is an integer greater than or equal to 2; and sending the first configuration information.

Based on the foregoing technical solution, a plurality of CG PUSCH resources are configured in a CG periodicity, and a time domain resource of a later CG PUSCH in time domain is smaller than a time domain resource of an earlier CG PUSCH. In other words, time domain resources of the plurality of PUSCHs in the CG periodicity correspondingly show a monotonically non-increasing trend. Compared with an existing CG PUSCH configuration manner, in this technical solution, a flexible configuration of the first configuration information on a network side is improved, and this is more applicable.

With reference to the sixth aspect, in some implementations of the sixth aspect, the first configuration information is carried in RRC or DCI.

With reference to the sixth aspect, in some implementations of the sixth aspect, data is sent on N CG PUSCHs. N is a positive integer less than or equal to M.

With reference to the sixth aspect, in some implementations of the sixth aspect, a frequency domain resource of the first CG PUSCH is different from a frequency domain resource of the second CG PUSCH.

With reference to the sixth aspect, in some implementations of the sixth aspect, a frequency domain resource size of the second CG PUSCH is smaller than a frequency domain resource size of the first CG PUSCH.

With reference to the sixth aspect, in some implementations of the sixth aspect, the first configuration information includes M pieces of indication information, the M pieces of indication information are in one-to-one correspondence with the M CG PUSCHs, the M pieces of indication information include first indication information and second indication information, the first indication information indicates the frequency domain resource size of the first CG PUSCH, and the second indication information indicates the frequency domain resource size of the second CG PUSCH.

With reference to the sixth aspect, in some implementations of the sixth aspect, the M CG PUSCHs further include a third CG PUSCH, the third CG PUSCH is located before the second CG PUSCH in time domain, and a frequency domain resource size of the third CG PUSCH is equal to the frequency domain resource size of the first CG PUSCH.

With reference to the sixth aspect, in some implementations of the sixth aspect, a difference between the frequency domain resource size of the first CG PUSCH and the frequency domain resource size of the second CG PUSCH is an integer multiple of a first step value; and the first configuration information further indicates the frequency domain resource size of the first CG PUSCH.

With reference to the sixth aspect, in some implementations of the sixth aspect, the first configuration information further indicates the first step value; or the first step value is predefined; or the method further includes: sending third indication information, where the third indication information indicates the first step value.

With reference to the sixth aspect, in some implementations of the sixth aspect, the first configuration information includes Q pieces of indication information, the Q pieces of indication information include fourth indication information and fifth indication information, the fourth indication information indicates the frequency domain resource size of the first CG PUSCH, the fifth indication information indicates the frequency domain resource size of the second CG PUSCH, and Q is an integer greater than or equal to 2 and less than or equal to M; and the M CG PUSCHs further include the fourth CG PUSCH, the fourth CG PUSCH is located between the first CG PUSCH and the second CG PUSCH in time domain, and the first configuration information further indicates that frequency domain resource sizes of all CG PUSCHs located before the fourth CG PUSCH in time domain are the same as the frequency domain resource size of the first CG PUSCH, and frequency domain resource sizes of all CG PUSCHs located after the fourth CG PUSCH in time domain are the same as the frequency domain resource size of the second CG PUSCH.

With reference to the sixth aspect, in some implementations of the sixth aspect, a frequency domain resource size of the fourth CG PUSCH is the same as the frequency domain resource size of the first CG PUSCH, or a frequency domain resource size of the fourth CG PUSCH is the same as the frequency domain resource size of the second CG PUSCH.

With reference to the sixth aspect, in some implementations of the sixth aspect, the first configuration information further indicates a position of the fourth CG PUSCH, or a position of the fourth CG PUSCH is predefined.

With reference to the sixth aspect, in some implementations of the sixth aspect, the first configuration information includes sixth indication information, and the sixth indication information indicates the frequency domain resource size of the first CG PUSCH; and the M CG PUSCHs further include a fifth CG PUSCH, and the first configuration information further indicates that frequency domain resource sizes of all CG PUSCHs located before the fifth CG PUSCH in time domain are the same as the frequency domain resource size of the first CG PUSCH, and a difference between frequency domain resource sizes of all CG PUSCHs located after the fifth CG PUSCH in time domain is an integer multiple of a second step value.

With reference to the sixth aspect, in some implementations of the sixth aspect, the first configuration information further indicates the second step value; or the second step value is predefined; or the method further includes: sending seventh indication information, where the seventh indication information indicates the second step value.

With reference to the sixth aspect, in some implementations of the sixth aspect, the first configuration information further indicates a position of the fifth CG PUSCH, or a position of the fifth CG PUSCH is predefined.

For beneficial effect of the sixth aspect and some implementations of the sixth aspect, correspondingly refer to related descriptions of the first aspect. Details are not described herein again.

According to a seventh aspect, a communication method is provided. The method may be performed by a terminal device, or may be performed by a component (for example, a chip or a circuit) of the terminal device. This is not limited. For ease of description, an example in which the method is performed by the terminal device is used below for description.

The method may include: receiving first configuration information. The first configuration information indicates M CG PUSCHs in a first CG periodicity, the M CG PUSCHs include a first CG PUSCH and a second CG PUSCH, the first CG PUSCH is located before the second CG PUSCH in time domain, a frequency domain resource of the first CG PUSCH is different from a time domain resource of the second CG PUSCH, and M is an integer greater than 1.

Based on the foregoing technical solution, a plurality of CG PUSCH resources are configured in a CG periodicity, and a frequency domain resource of a later CG PUSCH in time domain is smaller than a frequency domain resource of an earlier CG PUSCH. In other words, frequency domain resources of the plurality of PUSCHs in the CG periodicity correspondingly show a monotonically non-increasing trend. Compared with an existing CG PUSCH configuration manner, in this technical solution, a flexible configuration of the first configuration information on a network side is improved, and this is more applicable.

With reference to the seventh aspect, in some implementations of the seventh aspect, the first configuration information is carried in RRC or DCI.

With reference to the seventh aspect, in some implementations of the seventh aspect, data is sent on N CG PUSCHs. N is a positive integer less than or equal to M.

With reference to the seventh aspect, in some implementations of the seventh aspect, a frequency domain resource size of the second CG PUSCH is smaller than a frequency domain resource size of the first CG PUSCH.

With reference to the seventh aspect, in some implementations of the seventh aspect, the first configuration information includes M pieces of indication information, the M pieces of indication information are in one-to-one correspondence with the M CG PUSCHs, the M pieces of indication information include first indication information and second indication information, the first indication information indicates the frequency domain resource size of the first CG PUSCH, and the second indication information indicates the frequency domain resource size of the second CG PUSCH.

With reference to the seventh aspect, in some implementations of the seventh aspect, the M CG PUSCHs further include a third CG PUSCH, the third CG PUSCH is located before the second CG PUSCH in time domain, and a frequency domain resource size of the third CG PUSCH is equal to the frequency domain resource size of the first CG PUSCH.

With reference to the seventh aspect, in some implementations of the seventh aspect, a difference between the frequency domain resource size of the first CG PUSCH and the frequency domain resource size of the second CG PUSCH is an integer multiple of a first step value; and the first configuration information further indicates the frequency domain resource size of the first CG PUSCH.

With reference to the seventh aspect, in some implementations of the seventh aspect, the first configuration information further indicates the first step value; or the first step value is predefined; or the method further includes: receiving third indication information, where the third indication information indicates the first step value.

With reference to the seventh aspect, in some implementations of the seventh aspect, the first configuration information includes Q pieces of indication information, the Q pieces of indication information include fourth indication information and fifth indication information, the fourth indication information indicates the frequency domain resource size of the first CG PUSCH, the fifth indication information indicates the frequency domain resource size of the second CG PUSCH, and Q is an integer greater than or equal to 2 and less than or equal to M; and the M CG PUSCHs further include a fourth CG PUSCH, the fourth CG PUSCH is located between the first CG PUSCH and the second CG PUSCH in time domain, and the first configuration information further indicates that frequency domain resource sizes of all CG PUSCHs located before the fourth CG PUSCH in time domain are the same as the frequency domain resource size of the first CG PUSCH, and frequency domain resource sizes of all CG PUSCHs located after the fourth CG PUSCH in time domain are the same as the frequency domain resource size of the second CG PUSCH.

With reference to the seventh aspect, in some implementations of the seventh aspect, a frequency domain resource size of the fourth CG PUSCH is the same as the frequency domain resource size of the first CG PUSCH, or a frequency domain resource size of the fourth CG PUSCH is the same as the frequency domain resource size of the second CG PUSCH.

With reference to the seventh aspect, in some implementations of the seventh aspect, the first configuration information further indicates a position of the fourth CG PUSCH, or a position of the fourth CG PUSCH is predefined.

With reference to the seventh aspect, in some implementations of the seventh aspect, the first configuration information includes sixth indication information, and the sixth indication information indicates the frequency domain resource size of the first CG PUSCH; and the M CG PUSCHs further include a fifth CG PUSCH, the fifth CG PUSCH is located between the first CG PUSCH and the second CG PUSCH in time domain, and the first configuration information further indicates that frequency domain resource sizes of all CG PUSCHs located before the fifth CG PUSCH in time domain are the same as the frequency domain resource size of the first CG PUSCH, and a difference between frequency domain resource sizes of all CG PUSCHs located after the fifth CG PUSCH in time domain is an integer multiple of a second step value.

With reference to the seventh aspect, in some implementations of the seventh aspect, the first configuration information further indicates the second step value; or the second step value is predefined; or the method further includes: receiving seventh indication information, where the seventh indication information indicates the second step value.

With reference to the seventh aspect, in some implementations of the seventh aspect, the first configuration information further indicates a position of the fifth CG PUSCH, or a position of the fifth CG PUSCH is predefined.

With reference to the seventh aspect, in some implementations of the seventh aspect, a time domain resource size of the second CG PUSCH is smaller than a time domain resource size of the first CG PUSCH.

For beneficial effect of the seventh aspect and some implementations of the seventh aspect, correspondingly refer to related descriptions of the first aspect. Details are not described herein again.

According to an eighth aspect, a communication method is provided, applied to a network device. The method may be performed by the network device, or may be performed by a component (for example, a chip or a circuit) of the network device. This is not limited. For ease of description, an example in which the method is performed by the network device is used below for description.

The method may include: sending first configuration information. The first configuration information indicates M configured grant CG PUSCHs in a first CG periodicity, the M CG PUSCHs include a first CG PUSCH and a second CG PUSCH, the first CG PUSCH is located before the second CG PUSCH in time domain, a frequency domain resource of the first CG PUSCH is different from a time domain resource of the second CG PUSCH, and M is an integer greater than 1.

Based on the foregoing technical solution, a plurality of CG PUSCH resources are configured in a CG periodicity, and a frequency domain resource of a later CG PUSCH in time domain is smaller than a frequency domain resource of an earlier CG PUSCH. In other words, frequency domain resources of the plurality of PUSCHs in the CG periodicity correspondingly show a monotonically non-increasing trend. Compared with an existing CG PUSCH configuration manner, in this technical solution, a flexible configuration of the first configuration information on a network side is improved, and this is more applicable.

With reference to the eighth aspect, in some implementations of the eighth aspect, the first configuration information is carried in RRC or DCI.

With reference to the eighth aspect, in some implementations of the eighth aspect, data is received on N CG PUSCHs. N is a positive integer less than or equal to M.

With reference to the eighth aspect, in some implementations of the eighth aspect, a frequency domain resource size of the second CG PUSCH is smaller than a frequency domain resource size of the first CG PUSCH.

With reference to the eighth aspect, in some implementations of the eighth aspect, the first configuration information includes M pieces of indication information, the M pieces of indication information are in one-to-one correspondence with the M CG PUSCHs, the M pieces of indication information include first indication information and second indication information, the first indication information indicates the frequency domain resource size of the first CG PUSCH, and the second indication information indicates the frequency domain resource size of the second CG PUSCH.

With reference to the eighth aspect, in some implementations of the eighth aspect, the M CG PUSCHs further include a third CG PUSCH, the third CG PUSCH is located before the second CG PUSCH in time domain, and a frequency domain resource size of the third CG PUSCH is equal to the frequency domain resource size of the first CG PUSCH.

With reference to the eighth aspect, in some implementations of the eighth aspect, a difference between the frequency domain resource size of the first CG PUSCH and the frequency domain resource size of the second CG PUSCH is an integer multiple of a first step value; and the first configuration information further indicates the frequency domain resource size of the first CG PUSCH.

With reference to the eighth aspect, in some implementations of the eighth aspect, the first configuration information further indicates the first step value; or the first step value is predefined; or the method further includes: sending third indication information, where the third indication information indicates the first step value.

With reference to the eighth aspect, in some implementations of the eighth aspect, the first configuration information includes Q pieces of indication information, the Q pieces of indication information include fourth indication information and fifth indication information, the fourth indication information indicates the frequency domain resource size of the first CG PUSCH, the fifth indication information indicates the frequency domain resource size of the second CG PUSCH, and Q is an integer greater than or equal to 2 and less than or equal to M; and the M CG PUSCHs further include the fourth CG PUSCH, the fourth CG PUSCH is located between the first CG PUSCH and the second CG PUSCH in time domain, and the first configuration information further indicates that frequency domain resource sizes of all CG PUSCHs located before the fourth CG PUSCH in time domain are the same as the frequency domain resource size of the first CG PUSCH, and frequency domain resource sizes of all CG PUSCHs located after the fourth CG PUSCH in time domain are the same as the frequency domain resource size of the second CG PUSCH.

With reference to the eighth aspect, in some implementations of the eighth aspect, a frequency domain resource size of the fourth CG PUSCH is the same as the frequency domain resource size of the first CG PUSCH, or a frequency domain resource size of the fourth CG PUSCH is the same as the frequency domain resource size of the second CG PUSCH.

With reference to the eighth aspect, in some implementations of the eighth aspect, the first configuration information further indicates a position of the fourth CG PUSCH, or a position of the fourth CG PUSCH is predefined.

With reference to the eighth aspect, in some implementations of the eighth aspect, the first configuration information includes sixth indication information, and the sixth indication information indicates the frequency domain resource size of the first CG PUSCH; and the M CG PUSCHs further include a fifth CG PUSCH, and the first configuration information further indicates that frequency domain resource sizes of all CG PUSCHs located before the fifth CG PUSCH in time domain are the same as the frequency domain resource size of the first CG PUSCH, and a difference between frequency domain resource sizes of all CG PUSCHs located after the fifth CG PUSCH in time domain is an integer multiple of a second step value.

With reference to the eighth aspect, in some implementations of the eighth aspect, the first configuration information further indicates the second step value; or the second step value is predefined; or the method further includes: sending seventh indication information, where the seventh indication information indicates the second step value.

With reference to the eighth aspect, in some implementations of the eighth aspect, the first configuration information further indicates a position of the fifth CG PUSCH, or a position of the fifth CG PUSCH is predefined.

For beneficial effect of the eighth aspect and some implementations of the eighth aspect, correspondingly refer to related descriptions of the first aspect. Details are not described herein again.

According to a ninth aspect, a communication apparatus is provided. The apparatus includes an interface unit. The interface unit is configured to receive first configuration information. The first configuration information indicates M CG PUSCHs in a first CG periodicity, the M CG PUSCHs include a first CG PUSCH and a second CG PUSCH, the first CG PUSCH is located before the second CG PUSCH in time domain, a time domain resource size of the second CG PUSCH is smaller than a time domain resource size of the first CG PUSCH, and M is an integer greater than 1. The interface unit is further configured to send data on N CG PUSCHs. N is a positive integer less than or equal to M.

Optionally, the apparatus further includes a processing unit. The processing unit and the interface unit may be a processor and a transceiver that are configured to support the communication device to perform a corresponding function in the foregoing methods. The processor and the transceiver are communicatively connected. The transceiver is configured to perform specific signal receiving and sending under driving of the processor. The processor is configured to invoke instructions to implement the communication method according to the first aspect or the implementations of the first aspect.

According to a tenth aspect, a communication apparatus is provided. The apparatus includes an interface unit. The interface unit is configured to send first configuration information. The first configuration information indicates M CG PUSCHs in a first CG periodicity, the M CG PUSCHs include a first CG PUSCH and a second CG PUSCH, the first CG PUSCH is located before the second CG PUSCH in time domain, a time domain resource size of the second CG PUSCH is smaller than a time domain resource size of the first CG PUSCH, and M is an integer greater than 1. The interface unit is further configured to receive data on N CG PUSCHs. N is a positive integer less than or equal to M.

Optionally, the apparatus further includes a processing unit. The processing unit is configured to generate the first configuration information. The processing unit and the interface unit may be a processor and a transceiver that are configured to support the communication device to perform a corresponding function in the foregoing methods. The processor and the transceiver are communicatively connected. The transceiver is configured to perform specific signal receiving and sending under driving of the processor. The processor is configured to invoke instructions to implement the communication method according to the second aspect or the implementations of the second aspect.

According to an eleventh aspect, a communication apparatus is provided. The apparatus includes an interface unit. The interface unit is configured to receive first configuration information, the first configuration information indicates M CG PUSCHs in a first CG periodicity, the M CG PUSCHs include a first CG PUSCH and a second CG PUSCH, the first CG PUSCH is located before the second CG PUSCH in time domain, a frequency domain resource of the first CG PUSCH is different from a time domain resource of the second CG PUSCH, and M is an integer greater than 1. The interface unit is further configured to send data on N CG PUSCHs. N is a positive integer less than or equal to M.

Optionally, the apparatus further includes a processing unit. The processing unit and the interface unit may be a processor and a transceiver that are configured to support the communication device to perform a corresponding function in the foregoing methods. The processor and the transceiver are communicatively connected. The transceiver is configured to perform specific signal receiving and sending under driving of the processor. The processor is configured to invoke instructions to implement the communication method according to the third aspect or the implementations of the third aspect.

According to a twelfth aspect, a communication apparatus is provided. The apparatus includes an interface unit. The interface unit is configured to send first configuration information, the first configuration information indicates M CG PUSCHs in a first CG periodicity, the M CG PUSCHs include a first CG PUSCH and a second CG PUSCH, the first CG PUSCH is located before the second CG PUSCH in time domain, a frequency domain resource of the first CG PUSCH is different from a time domain resource of the second CG PUSCH, and M is an integer greater than 1. The interface unit is further configured to receive data on N CG PUSCHs. N is a positive integer less than or equal to M.

Optionally, the apparatus further includes a processing unit. The processing unit is configured to generate the first configuration information. The processing unit and the interface unit may be a processor and a transceiver that are configured to support the communication device to perform a corresponding function in the foregoing methods. The processor and the transceiver are communicatively connected. The transceiver is configured to perform specific signal receiving and sending under driving of the processor. The processor is configured to invoke the instructions to implement the communication method according to the fourth aspect or the implementations of the fourth aspect.

According to a thirteenth aspect, a communication apparatus is provided. The apparatus includes an interface unit. The interface unit is configured to receive first configuration information. The first configuration information indicates M CG PUSCHs in a first CG periodicity, the M CG PUSCHs include a first CG PUSCH and a second CG PUSCH, the first CG PUSCH is located before the second CG PUSCH in time domain, a time domain resource size of the second CG PUSCH is smaller than a time domain resource size of the first CG PUSCH, and M is an integer greater than 1.

Optionally, the apparatus further includes a processing unit. The processing unit and the interface unit may be a processor and a transceiver that are configured to support the communication device to perform a corresponding function in the foregoing methods. The processor and the transceiver are communicatively connected. The transceiver is configured to perform specific signal receiving and sending under driving of the processor. The processor is configured to invoke the instructions to implement the communication method according to the fifth aspect or the implementations of the fifth aspect.

According to a fourteenth aspect, a communication apparatus is provided. The apparatus includes an interface unit and a processing unit. The processing unit is configured to generate first configuration information. The interface unit is configured to send first configuration information. The first configuration information indicates M CG PUSCHs in a first CG periodicity, the M CG PUSCHs include a first CG PUSCH and a second CG PUSCH, the first CG PUSCH is located before the second CG PUSCH in time domain, a time domain resource size of the second CG PUSCH is smaller than a time domain resource size of the first CG PUSCH, and M is an integer greater than 1.

The processing unit and the interface unit may be a processor and a transceiver that are configured to support the communication device to perform a corresponding function in the foregoing methods. The processor and the transceiver are communicatively connected. The transceiver is configured to perform specific signal receiving and sending under driving of the processor. The processor is configured to invoke the instructions to implement the communication method according to the sixth aspect or the implementations of the sixth aspect.

According to a fifteenth aspect, a communication apparatus is provided. The apparatus includes an interface unit. The interface unit is configured to receive first configuration information, the first configuration information indicates M CG PUSCHs in a first CG periodicity, the M CG PUSCHs include a first CG PUSCH and a second CG PUSCH, the first CG PUSCH is located before the second CG PUSCH in time domain, a frequency domain resource of the first CG PUSCH is different from a time domain resource of the second CG PUSCH, and M is an integer greater than 1.

Optionally, the apparatus further includes a processing unit. The processing unit and the interface unit may be a processor and a transceiver that are configured to support the communication device to perform a corresponding function in the foregoing methods. The processor and the transceiver are communicatively connected. The transceiver is configured to perform specific signal receiving and sending under driving of the processor. The processor is configured to invoke the instructions to implement the communication method according to the seventh aspect or the implementations of the seventh aspect.

According to a sixteenth aspect, a communication apparatus is provided. The apparatus includes an interface unit and a processing unit. The processing unit is configured to generate first configuration information. The interface unit is configured to send the first configuration information. The first configuration information indicates M CG PUSCHs in a first CG periodicity, the M CG PUSCHs include a first CG PUSCH and a second CG PUSCH, the first CG PUSCH is located before the second CG PUSCH in time domain, a frequency domain resource of the first CG PUSCH is different from a time domain resource of the second CG PUSCH, and M is an integer greater than 1.

The processing unit and the interface unit may be a processor and a transceiver that are configured to support the communication device to perform a corresponding function in the foregoing methods. The processor and the transceiver are communicatively connected. The transceiver is configured to perform specific signal receiving and sending under driving of the processor. The processor is configured to invoke the instructions to implement the communication method according to the eighth aspect or the implementations of the eighth aspect.

According to a seventeenth aspect, a communication apparatus is provided, including a processor. The processor is configured to: invoke a computer program from a memory, and run the computer program, so that the communication apparatus performs the method according to any possible implementation of the first aspect to the eighth aspect.

Optionally, there are one or more processors.

Optionally, the communication apparatus further includes one or more memories. The memory may be integrated with the processor, or the memory and the processor are separately disposed.

Optionally, the communication apparatus further includes a transmitter machine (transmitter) and a receiver machine (receiver).

According to an eighteenth aspect, a communication system is provided, including a network device and a terminal device. The terminal device is configured to perform the method according to any possible implementation of the first aspect, the third aspect, the fifth aspect, or the seventh aspect, and the network device is configured to perform the method according to any possible implementation of the second aspect, the fourth aspect, the sixth aspect, or the eighth aspect.

According to a nineteenth aspect, a computer-readable storage medium is provided. The computer-readable storage medium stores a computer program or code. When the computer program or code is run on a computer, the computer is enabled to perform the method according to any possible implementation of the first aspect to the eighth aspect.

According to a twentieth aspect, a chip is provided, including at least one processor. The at least one processor is coupled to a memory. The memory is configured to store a computer program. The processor is configured to: invoke the computer program from the memory, and run the computer program, so that an apparatus on which the chip system is installed performs the method according to any possible implementation of the first aspect to the eighth aspect.

The chip may include an input circuit or interface for sending information or data and an output circuit or interface for receiving information or data.

According to a twenty-first aspect, a computer program product is provided. The computer program product includes computer program code. When the computer program code is run on a communication apparatus, the apparatus is enabled to perform the method according to any possible implementation of the first aspect to the eighth aspect.

### BRIEF DESCRIPTION OF DRAWINGS

FIG. 1 is a diagram of an architecture of a communication system to which an embodiment of this application is applicable;
FIG. 2 is a diagram of a CG of an unlicensed frequency band;
FIG. 3 is a diagram of a CG of a licensed frequency band;
FIG. 4 is a schematic flowchart of a communication method 400 according to an embodiment of this application;
FIG. 5 is a schematic flowchart of a communication method 500 according to an embodiment of this application;
FIG. 6 to FIG. 9 each are a diagram of a resource configuration of a plurality of PUSCHs according to an embodiment of this application;
FIG. 10 is a diagram of a structure of a communication apparatus 1000 according to an embodiment of this application;
FIG. 11 is a diagram of a structure of a communication apparatus 2000 according to an embodiment of this application; and
FIG. 12 is a diagram of a structure of a chip system 3000 according to an embodiment of this application.

### DESCRIPTION OF EMBODIMENTS

The following describes technical solutions of embodiments in this application with reference to accompanying drawings.

The technical solutions in embodiments of this application may be applied to various communication systems such as a long term evolution (long term evolution, LTE) system, a long term evolution advanced (LTE advanced, LTE-A) system, an LTE frequency division duplex (frequency division duplex, FDD) system, an LTE time division duplex (time division duplex, TDD) system, or a 5th generation (5th Generation, 5G) system, for example, an NR system, or a future evolved communication system (for example, a 6G mobile communication system). The technical solutions in embodiments of this application may be applied to various scenarios such as vehicle-to-everything (vehicle-to-everything, V2X), internet of vehicles, machine type communication (machine type communication, MTC), internet of things (Internet of things, IoT), long term evolution-machine technology (long term evolution-machine, LTE-M), and machine-to-machine (machine to machine, M2M).

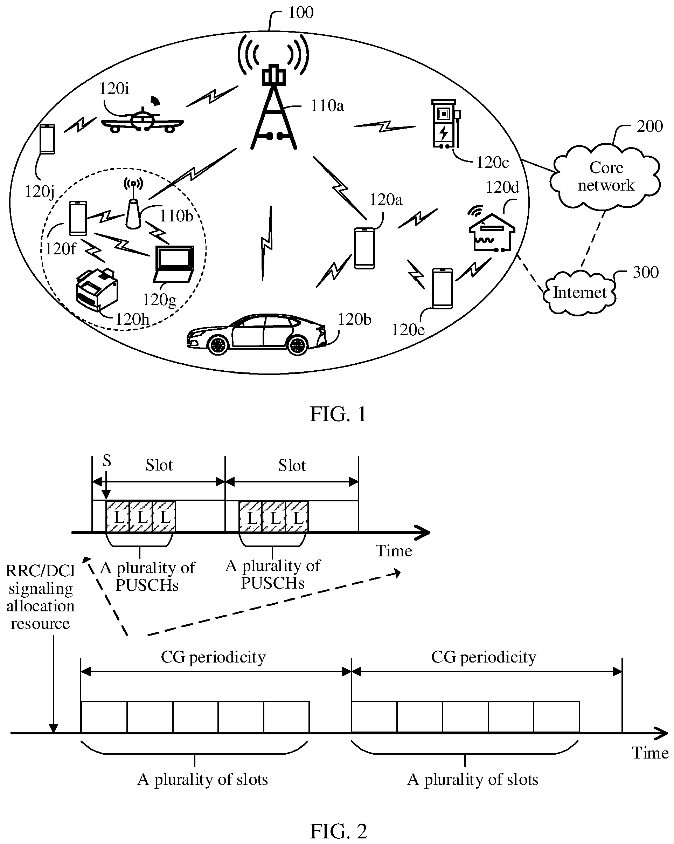

For ease of understanding of embodiments of this application, a communication system to which a method provided in embodiments of this application is applicable is first described in detail with reference to FIG. 1.

The following describes technical solutions of this application with reference to accompanying drawings.

The technical solutions in embodiments of this application may be applied to various communication systems such as a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a 5th generation (5th generation, 5G) system, a new radio (new radio, NR) system, or another evolved communication system.

The technical solutions provided in this application may be further applied to machine type communication (machine type communication, MTC), a long term evolution-machine technology (long term evolution-machine, LTE-M), a device-to-device (device-to-device, D2D) network, a machine-to-machine (machine-to-machine, M2M) network, an internet of things (internet of things, IoT) network, or another network. The IoT network may include, for example, the internet of vehicles. Communication manners in an internet of vehicles system are collectively referred to as vehicle-to-X (vehicle-to-X, V2X, where X may represent anything). For example, the V2X may include vehicle-to-vehicle (vehicle-to-vehicle, V2V) communication, vehicle-to-infrastructure (vehicle-to-infrastructure, V2I) communication, vehicle-to-pedestrian (vehicle-to-pedestrian, V2P) communication, vehicle-to-network (vehicle-to-network, V2N) communication, or the like. The technical solutions provided in this application may be further applied to a future communication system, for example, a sixth generation mobile communication system. This is not limited in this application.

FIG. 1 is a diagram of an architecture of a communication system to which an embodiment of this application is applicable. As shown in FIG. 1, the communication system includes a radio access network 100 and a core network 200. Optionally, the communication system may further include an internet 300. The radio access network 100 may include at least one radio access network device (for example, 110a and 110b in FIG. 1), and may further include at least one terminal (for example, 120a to 120j in FIG. 1). The terminal is connected to the radio access network device in a wireless manner, and the radio access network device is connected to the core network in a wireless or wired manner. A core network device and the radio access network device may be independent and different physical devices, or functions of the core network device and logical functions of the radio access network device are integrated into a same physical device, or some functions of the core network device and some functions of the radio access network device are integrated into one physical device. A wired or wireless manner may be used for connection between terminals and between radio access network devices. FIG. 1 is merely a diagram. The communication system may further include another network device, for example, may further include a wireless relay device and a wireless backhaul device, which are not shown in FIG. 1.

The radio access network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, a base station in a future mobile communication system, an access node in a Wi-Fi system, or the like; or may be a module or unit that completes some functions of the base station, for example, may be a central unit (central unit, CU), or may be a distributed unit (distributed unit, DU). The CU herein completes functions of a radio resource control protocol and a packet data convergence protocol (packet data convergence protocol, PDCP) of the base station, and may further complete a function of a service data adaptation protocol (service data adaptation protocol, SDAP). The DU completes functions of a radio link control layer and a media access control (media access control, MAC) layer of the base station, and may further complete a part or all of functions of a physical layer. For specific descriptions of the foregoing protocol layers, refer to technical specifications related to the 3rd generation partnership project (3rd generation partnership project, 3GPP). The radio access network device may be a macro base station (for example, 110a in FIG. 1), or may be a micro base station or an indoor base station (for example, 110b in FIG. 1), or may be a relay node or a donor node. A specific technology and a specific device form that are used by the radio access network device are not limited in this embodiment of this application. For ease of description, the following provides descriptions by using an example in which the base station serves as the radio access network device.

The terminal may alternatively be referred to as a terminal device, user equipment (user equipment, UE), a mobile station, a mobile terminal, or the like. The terminal may be widely used in various scenarios, for example, device-to-device (device-to-device, D2D), vehicle to everything communication, machine-type communication (machine-type communication, MTC), internet of things (internet of things, IoT), virtual reality, augmented reality, industrial control, self-driving, telemedicine, smart grid, smart furniture, smart office, smart wearable, smart transportation, and smart city. The terminal may be a mobile phone, a tablet computer, a computer with a wireless transceiver function, a wearable device, a vehicle, an uncrewed aerial vehicle, a helicopter, an airplane, a ship, a robot, a robot arm, a smart home device, or the like. A specific technology and a specific device form that are used by the terminal are not limited in this embodiment of this application.

The base station and the terminal may be fixed or movable. The base station and the terminal may be deployed on land, including an indoor or outdoor device, a hand-held device, or a vehicle-mounted device, or may be deployed on water, or may be deployed on an airplane, a balloon, or an artificial satellite. Application scenarios of the base station and the terminal are not limited in this embodiment of this application.

Roles of the base station and the terminal may be relative. For example, a helicopter or an uncrewed aerial vehicle 120i in FIG. 1 may be configured as a mobile base station, and for a terminal 120j accessing the radio access network 100 through 120i, a terminal 120i is a base station. However, for the base station 110a, 120i is a terminal. In other words, communication between 110a and 120i is performed based on a wireless air interface protocol. Certainly, communication between 110a and 120i may alternatively be performed based on an interface protocol between base stations. In this case, for 110a, 120i is also a base station. Therefore, both the base station and the terminal may be collectively referred to as a communication apparatus, 110a and 110b in FIG. 1 may be referred to as a communication apparatus having a base station function, and 120a to 120j in FIG. 1 may be referred to as a communication apparatus having a terminal function.

Communication between the base station and the terminal, between the base stations, and between the terminals may be performed based on a licensed spectrum, or may be performed based on an unlicensed spectrum, or may be performed based on both the licensed spectrum and the unlicensed spectrum. Communication may be performed based on a spectrum below 6 gigahertz (gigahertz, GHz), or may be performed based on a spectrum above 6 GHz, or may be performed based on both the spectrum below 6 GHz and the spectrum above 6 GHz. A spectrum resource for wireless communication is not limited in this embodiment of this application.

In this embodiment of this application, the base station function may be performed by a module (for example, a chip) in the base station, or may be performed by a control subsystem including the base station function. The control subsystem that includes the base station function herein may be a control center in the foregoing application scenarios such as smart grid, industrial control, intelligent transportation, and smart city. The terminal function may be performed by a module (for example, a chip or a modem) in the terminal, or may be performed by an apparatus including the terminal function.

The technical solutions provided in this embodiment of this application may be applied to wireless communication between communication devices. Wireless communication between communication devices may include: wireless communication between a base station and a terminal, wireless communication between base stations, and wireless communication between terminals. It may be understood that, in this embodiment of this application, the physical uplink shared channel (physical downlink share channel, PDSCH), the physical downlink control channel (physical downlink control channel, PDCCH), and the PUSCH are merely examples of a downlink data channel, a downlink control channel, and an uplink data channel respectively. In different systems and different scenarios, the data channel and the control channel may have different names. This is not limited in embodiments of this application. In this application, the base station sends a downlink signal or downlink information to the terminal. The downlink information is carried on a downlink channel. The terminal sends an uplink signal or uplink information to the base station. The uplink information is carried on an uplink channel. To communicate with the base station, the terminal needs to establish a wireless connection to a cell controlled by the base station. The cell that establishes the wireless connection to the terminal is referred to as a serving cell of the terminal. When communicating with the serving cell, the terminal is further interfered by a signal from a neighboring cell.

The communication system applied to embodiments of this application is merely an example for description, and the communication system applicable to embodiments of this application is not limited thereto. Any communication system that can implement functions of the foregoing devices is applicable to embodiments of this application.

Service models of an XR transmission service and a video transmission service are usually based on a frame rate and a periodic arrival. For example, for a video whose frame rate is 60 frames per second (frame per second, FPS), in an ideal case, picture frames arrive at an interval of 16.67 milliseconds, and data volumes of the picture frames that arrive are different. Different XR services usually have different uplink and downlink service models. A scene content display change in VR is caused by a posture or position (action). A VR service mainly uploads position and posture information, and a data volume is small, and usually, is merely dozens of kilobytes/second (kilobyte per second, kbps). Downlink transmission of the VR service is mainly for a rendered video stream, and a data volume is large, and may reach dozens to hundreds of megabits per second (megabits per second, mbps). Different from that in VR, a scene content display change in AR is caused by a change of a fixation focus target and a change of a spatial relationship (an action) between a position and a fixation point. Content uploaded by the AR service includes visual information (including a depth) needed for perception. Therefore, uplink transmission of the AR service is mainly for a clear and stable picture or video stream, and a data volume is large, or may be for some extracted environment feature information. Usually, an uplink rate required for initial experience of an interactive AR service is approximately 2 Mbps, and therefore, an uplink rate required for advanced experience is 10 Mbps to 20 Mbps. Therefore, compared with the VR service, the AR service has a higher requirement for an uplink transmission rate, making uplink transmission more challenging.

Configured scheduling (configured scheduling, CS) or configured grant CG is applicable to periodic service transmission. The CG means that in a transmission process, a scheduling resource is allocated by using RRC signaling or DCI, and then data transmission may be periodically performed on the scheduling resource. Each periodicity may be referred to as a CG periodicity. In an uplink transmission process, the CG allocates a scheduling resource to a physical uplink shared channel (physical uplink shared channel, PUSCH) by using RRC signaling or DCI, and then periodically performs data transmission on the PUSCH.

There are two types of CG. Type 1 (type 1) is to configure related parameters of CG transmission, for example, a CG periodicity, and a time domain resource and a frequency domain resource of the CG by using RRC signaling, and activate a corresponding CG resource by using the RRC signaling. Type 2 (type 2) is to configure a related parameter of CG transmission by using RRC signaling, for example, a CG periodicity, and then activate and indicate a corresponding CG resource by using DCI.

FIG. 2 is a diagram of a CG of an unlicensed frequency band. As shown in FIG. 2, a plurality of consecutive PUSCHs may be configured in one CG periodicity. For example, a network device may indicate, based on a parameter cg-nrofSlots-r16 in configurationGrantConfig, a quantity (for example, cg-nrofSlots-r16=5) of CG slots continuously allocated in one CG periodicity, to indicate that five consecutive slots are configured in one CG periodicity for CG transmission. For another example, a network device may further indicate S, L, and a PUSCH mapping type based on timeDomainAllocation. S represents a start symbol position in a slot, L represents an allocated symbol length, and a mapping manner in each slot is the same. For another example, a plurality of consecutive PUSCHs are allowed to be configured in each slot. A network device may further indicate, based on a parameter cg-nrofPUSCH-inSlot-r16 in GrantConfig, a quantity (for example, cg-nrofPUSCH-inSlot-r16=3) of these PUSCHs with a same length starting from a symbol S, to indicate that three consecutive symbols with a length of L starting from the symbol S are allocated PUSCH transmission resources.

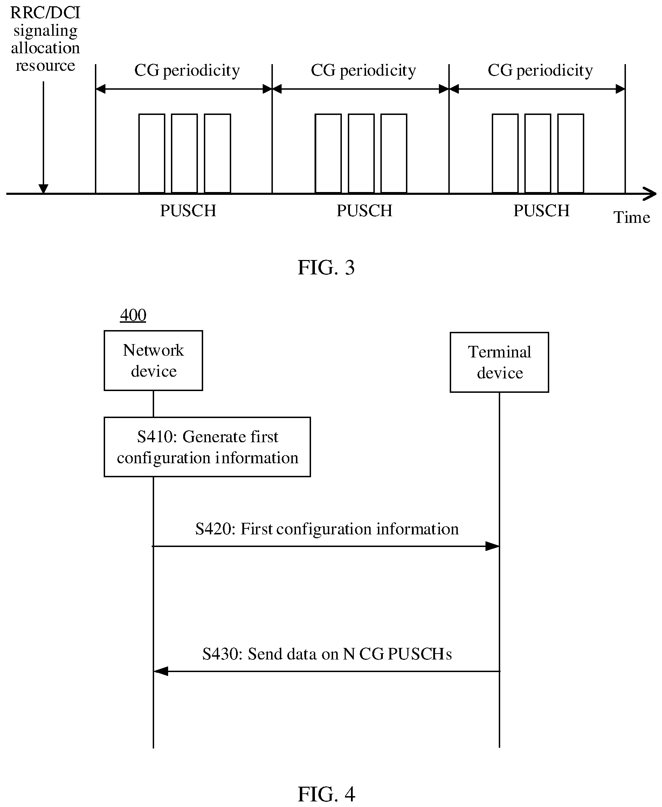

FIG. 3 is a diagram of a CG of a licensed frequency band. On the licensed frequency band, usually, one PUSCH transmission resource can be configured in each CG periodicity, and therefore, one transport block (transport block, TB) can be transmitted. For an XR service that has a large data volume and that dynamically changes, if one PUSCH transmission resource is configured in one CG periodicity, data transmission may not be able to be completed. As shown in FIG. 3, currently, a plurality of (for example, three) PUSCH transmission opportunities may be configured in one CG periodicity, and PUSCH transmission resources are increased to implement normal transmission of the XR service.

In Type 0, a frequency domain resource is usually allocated at a granularity of a resource block group (resource block group, RBG). The RBG is a group of consecutive resource blocks (resource block, RB). An RBG size (size) is determined based on both a configuration of a higher-layer parameter rbg-size and a bandwidth part (bandwidth part, BWP) bandwidth. If rbg-size is configured, configuration 2 (config2) is used for the RBG size; or if rbg-size is not configured, configuration 1 (config1) is used for the RBG size by default; and the RBG size and a quantity of RBs included in each RBG are calculated based on Table 1. A BWP indicates, by using a bitmap (bitmap), specific RBGs allocated to a terminal device, and each RBG corresponds to 1 bit. For example, if a BWP size is 48 RBs, configuration 1 is used, and a corresponding RBG size is 4 RBs, a bitmap length is 48/4=12 RGBs, and specifically allocated RBGs may be represented by using a bitmap "100111100111". In other words, "1" indicates that an RGB is allocated to the terminal device, and "0" indicates that an RGB is not allocated to the terminal device.

**Table 1**

| BWP | Configuration 1 | Configuration 2 |
|---|---|---|
| 1-36 | 2 | 4 |
| 37-72 | 4 | 8 |
| 73-144 | 8 | 16 |
| 145-275 | 16 | 16 |

In Type 1, a frequency domain resource is usually allocated at a granularity of an RB. In Type 1, a resource indication value (resource indication value, RIV) is used to indicate a resource, and a start position RB_start and an RB quantity Lrb are used to indicate the allocated frequency domain resource, similar to a start and length indicator (start and length Indicator, SLIV) in time domain. A maximum length of an RIV value is related to the BWP bandwidth. For example, the BWP size is 24 RBs, RB_start=10 (an 11^{th} RB), and Lrb=11 (a length is 11 RBs).

When a plurality of PUSCHs are configured in one CG periodicity, and uplink control information (uplink control information, UCI) carried on a first PUSCH indicates an unused PUSCH resource, the terminal device may report the PUSCH resource to a base station by using the UCI, to notify the base station that the PUSCH may be skipped, and the base station may allocate the PUSCH to another terminal device for use. However, when a scheduling capability of the base station is limited, the terminal device reports an unused PUSCH to the base station by using the UCI, and the base station has no capability of allocating the unused PUSCH to another UE or cannot allocate the unused PUSCH to another UE in a timely manner, the terminal device does not send data on the PUSCH. In this case, an allocated CG resource is wasted.

In view of this, embodiments of this application provide a communication method and a communication apparatus, to reduce a resource waste as much as possible and improve system resource utilization. According to the technical solution of this application, a plurality of CG PUSCH resources are configured in a CG periodicity, and it is ensured that a frequency domain resource of a later CG PUSCH in time domain is smaller than a frequency domain resource of an earlier CG PUSCH. Therefore, even if a terminal device does not use all of the plurality of CG PUSCHs for uplink transmission, and a network device does not allocate, to another terminal device in a timely manner, CG PUSCH resources that are not used by the terminal device, a CG PUSCH resource waste is reduced as much as possible and system resource utilization is improved.

For ease of understanding of embodiments of this application, the following descriptions are provided.

First, in this application, unless otherwise specified or a logic conflict occurs, terms and/or descriptions in different embodiments are consistent and may be mutually referenced, and technical features in different embodiments may be combined based on an internal logical relationship thereof, to form a new embodiment.

It may be understood that some optional features in embodiments of this application may be independent of other features in some scenarios, or may be combined with other features in some scenarios. This is not limited.

It may be understood that the solutions in embodiments of this application may be used in combination, and explanations or descriptions of terms, and similar operations or steps in the embodiments may be mutually referenced or explained in the embodiments. This is not limited in this application.

Second, in this application, "at least one" means one or more, and "a plurality of" means two or more. "And/or" describes an association relationship between associated objects, and indicates that three relationships may exist. For example, A and/or B may indicate the following three cases: Only A exists, both A and B exist, and only B exists, where A and B may be in a singular form or a plural form. In text descriptions of this application, the character "/" usually indicates an "or" relationship between associated objects. "At least one of the following items (pieces)" or a similar expression thereof means any combination of these items, including a single item (piece) or any combination of a plurality of items (pieces). For example, at least one (piece) of a, b, and c may indicate a, b, c, a and b, a and c, b and c, or a, b, and c. Each of a, b, and c may be in a singular form or a plural form.

Third, in this application, "first", "second", and various numbers are used for differentiation for ease of description, and are not used to limit the scope of embodiments of this application, for example, are intended to distinguish between different messages but not to describe a specific order or sequence. It should be understood that objects described in this way are interchangeable in an appropriate circumstance, so that a solution other than embodiments of this application can be described.

Fourth, in this application, the terms "include", "have", and any variants thereof are intended to cover a non-exclusive inclusion. For example, a process, method, system, product, or device that includes a series of steps or units is not necessarily limited to those steps or units that are clearly listed, but may include other steps or units that are not clearly listed or are inherent to the process, method, product, or device.

Fifth, in this application, "indicate" may include "directly indicate" and "indirectly indicate". When a piece of indication information indicates A, the indication information may directly indicate A or indirectly indicate A, but it does not indicate that the indication information definitely carries A.

Sixth, in this application, "sending information to XX (device)" may be understood as that a destination of the information is the device, may include directly or indirectly sending the information to the device. "Receiving information from XX (device) or receiving information from XX (device)" may be understood as that a source of the information is the device, and may include directly or indirectly receiving information from the device. Information may undergo necessary processing between the source for sending the information and the destination, for example, a format change. However, the destination may understand valid information from the source.

Seventh, in this application, "communication" may also be described as "data transmission", "information transmission", "data processing", or the like. "Transmission" includes "sending" and "receiving".

The following describes, in detail with reference to the accompanying drawings, the communication method provided in embodiments of this application. Embodiments provided in this application are applicable to any communication scenario in which a transmitter device communicates with a receiver device, for example, may be applied to the communication system shown in FIG. 1.

FIG. 4 is a diagram of a communication method 400 according to an embodiment of this application. It should be understood that the communication method 400 may be performed by a communication device (for example, a network device or a terminal device), or may be performed by a chip or a circuit of the communication device, or may be implemented by a logical module or software that can implement all or a part of functions of the communication device. This is not limited in this application. The following describes the technical solutions of this application by using an example in which execution bodies are the network device and the terminal device. As shown in FIG. 4, the method includes the following plurality of steps.

S410: The network device generates first configuration information.

The first configuration information indicates M CG PUSCHs in a first CG periodicity, and M is an integer greater than or equal to 2. It should be understood that the M CG PUSCHs are used by the terminal device to perform configured grant transmission of uplink data. The M CG PUSCHs may be consecutive or inconsecutive in time domain. This is not limited in this application. Optionally, the terminal device may determine, based on a size of to-be-transmitted uplink data, a transmission delay, and the like, to perform uplink transmission on N CG PUSCHs in the M CG PUSCHs. N is a positive integer less than or equal to M, and the N CG PUSCHs may be consecutive or inconsecutive in time domain. This is not specifically limited in this application.

For ease of understanding and description, in this embodiment of this application, the CG PUSCH may also be replaced with descriptions such as a CG uplink resource, a CG PUSCH resource, a CG PUSCH transmission resource, and a CG transmission occasion. It should be understood that the resource may be used to carry data or information. In time domain, the resource may include one or more time domain units (or time units). One time domain unit may be one symbol (symbol), one slot (slot), a part of a slot, one subframe, one radio frame, or the like. In frequency domain, the resource may include one or more frequency domain units. One frequency domain unit may be one resource element (resource element, RE), one RB, one subchannel, one resource pool, one BWP, or the like.

Optionally, the first configuration information may be carried in RRC signaling, or may be carried in RRC signaling and DCI. This is not specifically limited in this application. For Type 1, the first configuration information may be carried in RRC. For Type 2, the first configuration information may be carried in DCI. For implementations of CG resource configurations in Type 1 and Type 2, refer to existing related descriptions. Details are not described herein again.

In an implementation, the network device may configure M CG PUSCHs in one CG periodicity by using RRC signaling. The terminal device determines specific CG PUSCHs that are to be occupied to transmit the uplink data. Therefore, the network device does not determine specific PUSCHs that are the N CG PUSCHs in the M CG PUSCHs. For example, a 1^{st} CG PUSCH in the N CG PUSCHs may be a 2^{nd} PUSCH in the M CG PUSCHs in time domain. This is not limited in this application.

It should be noted that the technical solution of this application is applicable to one or more CG periodicities configured by the network device. For a plurality of CG periodicities, CG PUSCH configurations in all the CG periodicities may be the same or may be different. This is not specifically limited in this application.

The following describes a frequency domain resource configuration of the M CG PUSCHs.

For example, the M CG PUSCHs include a first CG PUSCH and a second CG PUSCH, the first CG PUSCH is located before the second CG PUSCH in time domain, and a time domain resource size of the second CG PUSCH is smaller than a time domain resource size of the first CG PUSCH.

Compared with an existing solution, when a plurality of CG PUSCHs are configured in one CG periodicity, time domain resource sizes corresponding to the plurality of CG PUSCHs on an unlicensed frequency band are the same; and time domain resource sizes corresponding to the plurality of CG PUSCHs on a licensed frequency band may be independently configured to be different. In the foregoing implementation, the CG PUSCHs may be configured with different time domain resources, and as the CG PUSCHs increase, the time domain resources show a monotonically non-increasing trend.

For example, a frequency domain resource of the first CG PUSCH is different from a frequency domain resource of the second CG PUSCH. For example, a frequency domain resource size of the second CG PUSCH is smaller than a frequency domain resource size of the first CG PUSCH.

Specifically, the network device changes, by changing a quantity (Type 0) of "1" included in a bitmap or changing a size (Type 1) of an allocated RIV field, frequency domain resource sizes of the M CG PUSCHs allocated to the terminal device. The bitmap and the RIV indicator field may be carried in frequencyDomainAllocation in RRC signaling (namely, the first configuration information), or the bitmap and the RIV indicator field may be carried in DCI. This is not specifically limited in this application.

Compared with an existing solution, when a plurality of PUSCHs are configured in one CG periodicity, regardless of whether NR-U or the licensed frequency band is used, frequency domain resources of the plurality of CG PUSCHs configured by the network device are the same, that is, a bitmap or an RIV field is configured with or indicates one value. In the foregoing implementation, the network device may configure different frequency domain resources for all CG PUSCHs. As the CG PUSCHs increase, the frequency domain resources show a monotonically non-increasing trend.

Optionally, a frequency domain resource position of the second CG PUSCH may be different from a frequency domain resource position of the first CG PUSCH. For example, the frequency domain resource of the second CG PUSCH includes an RB 0 to an RB 5, and the frequency domain resource of the first CG PUSCH includes the RB 0 to an RB 8; or the frequency domain resource of the second CG PUSCH includes an RB 4 to an RB 6, and the frequency domain resource of the first CG PUSCH includes an RB 0 to an RB 5. This is not specifically limited in this application.

In this embodiment of this application, a quantity of first CG PUSCHs and a quantity of second CG PUSCHs are not limited. To reduce a resource waste as much as possible, it only needs to ensure that a resource of a later PUSCH (for example, the second CG PUSCH) in time domain is smaller than a resource of an earlier PUSCH (for example, the first CG PUSCH).

In a first implementation, the first configuration information includes M pieces of indication information, the M pieces of indication information are in one-to-one correspondence with the M CG PUSCHs, the M pieces of indication information include first indication information and second indication information, the first indication information indicates the frequency domain resource size of the first CG PUSCH, and the second indication information indicates the frequency domain resource size of the second CG PUSCH.

Optionally, the M CG PUSCHs further include a third CG PUSCH, the third CG PUSCH is located before the second CG PUSCH in time domain, and a frequency domain resource size of the third CG PUSCH is equal to the frequency domain resource size of the first CG PUSCH.

A time domain resource position of the first CG PUSCH and a time domain resource position of the third CG PUSCH are not limited in this application. To be specific, the first CG PUSCH may be located before the third CG PUSCH in time domain, or may be located after the third CG PUSCH in time domain.

For example, the first indication information and the second indication information may be frequencyDomainAllocation fields. For example, the network device uses the first configuration information to carry at least M frequencyDomainAllocation fields. The M frequencyDomainAllocation fields respectively correspond to the M CG PUSCHs, and indicate frequency domain resource allocation statuses of all the CG PUSCHs, or frequency domain resource allocation statuses of all of the M CG PUSCHs, for example, quantities of included RBs, are indicated by using DCI.

In this implementation, because the network device configures or indicates a frequency domain resource of each CG PUSCH, for example, performs a configuration by using RRC or performs an indication by using DCI, dimensions and overheads of indication fields are increased. When a quantity of CG PUSCHs configured in one CG periodicity increases, corresponding signaling overheads are also greatly increased undoubtedly.

Optionally, the first configuration may alternatively include one piece of indication information (namely, thirteenth indication information), and the indication information indicates the frequency domain resource sizes of the M CG PUSCHs such as the frequency domain resource size of the first CG PUSCH and the frequency domain resource size of the second CG PUSCH.

For example, the indication information may be a frequencyDomainAllocation field. For example, the network device uses one frequencyDomainAllocation field to indicate frequency domain resource allocation statuses of the M CG PUSCHs, for example, quantities of included RBs.

Optionally, the M CG PUSCHs further include the third CG PUSCH, the third CG PUSCH is located before the second CG PUSCH in time domain, and the frequency domain resource size of the third CG PUSCH is equal to the frequency domain resource size of the first CG PUSCH.

Based on the foregoing solution, the configuration information carries one piece of indication information to indicate the frequency domain resource sizes of the M CG PUSCHs. Compared with the M pieces of indication information, signaling overheads can be reduced.

In a second implementation, a difference between the frequency domain resource size of the first CG PUSCH and the frequency domain resource size of the second CG PUSCH is an integer multiple of a first step value.

The first configuration information further indicates the frequency domain resource size of the first CG PUSCH, for example, a quantity of RBs or RBGs included in the first CG PUSCH.

Optionally, the first configuration information further indicates the first step value; or the first step value is predefined.

Optionally, the terminal device receives third indication information. The third indication information indicates the first step value. The third indication information may be the same as or different from the first configuration information. For example, the third indication information may be RRC or DCI.

It should be understood that the first step value is greater than 0. For example, the first step value may be four RBs. If the frequency domain resource size of the first CG PUSCH is 10 RBs (for example, an RB 0 to an RB 9), the frequency domain resource size of the second CG PUSCH may be six RBs (for example, the RB 0 to the RB 5).

In this implementation, the network device further indicates a relationship between frequency domain resource sizes of the plurality of CG PUSCHs by indicating the first step value. Compared with the first implementation, in this implementation, signaling overheads can be reduced.

In a third implementation, the first configuration information includes Q pieces of indication information, the Q pieces of indication information include fourth indication information and fifth indication information, the fourth indication information indicates the frequency domain resource size of the first CG PUSCH, the fifth indication information indicates the frequency domain resource size of the second CG PUSCH, and Q is an integer greater than or equal to 2 and less than or equal to M.

For example, the M CG PUSCHs further include a fourth CG PUSCH, and the fourth CG PUSCH is located between the first CG PUSCH and the second CG PUSCH in time domain.

The first configuration information further indicates that frequency domain resource sizes of all CG PUSCHs located before the fourth CG PUSCH in time domain are the same as the frequency domain resource size of the first CG PUSCH, and frequency domain resource sizes of all CG PUSCHs located after the fourth CG PUSCH in time domain are the same as the frequency domain resource size of the second CG PUSCH.

Optionally, a frequency domain resource size of the fourth CG PUSCH is the same as the frequency domain resource size of the first CG PUSCH, or a frequency domain resource size of the fourth CG PUSCH is the same as the frequency domain resource size of the second CG PUSCH.

Optionally, the first configuration information further indicates a position of the fourth CG PUSCH, or a position of the fourth CG PUSCH is predefined.

For example, the fourth indication information and the fifth indication information may be frequencyDomainAllocation fields. For example, if the network device uses the first configuration information to carry two frequencyDomainAllocation fields (for example, frequencyDomainAllocation 1 and frequencyDomainAllocation 2), and the fourth CG PUSCH is used as a transmission occasion, one or more CG PUSCHs (for example, the first CG PUSCH) before the fourth CG PUSCH correspond to frequencyDomainAllocation 1, for example, include 12 RBs, and one or more CG PUSCHs (for example, the second CG PUSCH) after the fourth CG PUSCH correspond to frequencyDomainAllocation 2, for example, include eight RBs. Optionally, the fourth CG PUSCH may correspond to frequencyDomainAllocation 1, and include 12 RBs, or may correspond to frequencyDomainAllocation 2, and include eight RBs. This is not specifically limited in this application.

Optionally, the first configuration may include one piece of indication information, and the indication information indicates frequency domain resource sizes of the M CG PUSCHs such as the frequency domain resource size of the first CG PUSCH and the frequency domain resource size of the second CG PUSCH.

Optionally, the M CG PUSCHs further include the fourth CG PUSCH, the fourth CG PUSCH is located between the first CG PUSCH and the second CG PUSCH in time domain, and the first configuration information further indicates that the frequency domain resource sizes of all the CG PUSCHs located before the fourth CG PUSCH in time domain are the same as the frequency domain resource size of the first CG PUSCH, and the frequency domain resource sizes of all the CG PUSCHs located after the fourth CG PUSCH in time domain are the same as the frequency domain resource size of the second CG PUSCH.

For example, the indication information may be a frequencyDomainAllocation field. For example, the network device configures one frequencyDomainAllocation field to indicate frequency domain resource allocation statuses of the M CG PUSCHs, for example, quantities of included RBs.

In a fourth implementation, the first configuration information includes sixth indication information, and the sixth indication information indicates the frequency domain resource size of the first CG PUSCH.

For example, the M CG PUSCHs further include a fifth CG PUSCH, and the fifth CG PUSCH is located between the first CG PUSCH and the second CG PUSCH in time domain.

The first configuration information further indicates that frequency domain resource sizes of all CG PUSCHs located before the fifth CG PUSCH in time domain are the same as the frequency domain resource size of the first CG PUSCH, and a difference between frequency domain resource sizes of all CG PUSCHs located after the fifth CG PUSCH in time domain is an integer multiple of a second step value.

Optionally, a frequency domain resource size of the fifth CG PUSCH may be the same as the frequency domain resource size of the first CG PUSCH; or a difference between a frequency domain resource size of the fifth CG PUSCH and the frequency domain resource size of the first CG PUSCH is the second step value, and by analogy, a difference between frequency domain resource sizes of one or more CG PUSCHs located after the fifth CG PUSCH in time domain is an integer multiple of the second step value.

Optionally, the first configuration information further indicates the second step value; or the second step value is predefined.

Optionally, the terminal device receives seventh indication information. The seventh indication information indicates the first step value. The seventh indication information may be the same as or different from the first configuration information. For example, the seventh indication information may be RRC or DCI.

It should be understood that the second step value is greater than 0. For example, the second step value may be two RBs. If the frequency domain resource size of the first CG PUSCH is 10 RBs (for example, the RB 0 to an RB 9), the frequency domain resource size of the second CG PUSCH may be eight RBs (for example, the RB 0 to an RB 7), and the frequency domain resource size of the fifth CG PUSCH may be 10 RBs (for example, the RB 0 to the RB 9). Alternatively, if the frequency domain resource size of the first CG PUSCH is 10 RBs (for example, the RB 0 to an RB 9), the frequency domain resource size of the fifth CG PUSCH may be eight RBs (for example, the RB 0 to an RB 7), and the frequency domain resource size of the second CG PUSCH may be six RBs (for example, the RB 0 to the RB 5).

Optionally, the first configuration information further indicates a position of the fifth CG PUSCH, or a position of the fifth CG PUSCH is predefined.

For example, the sixth indication information may be a frequencyDomainAllocation field. For example, if the network device uses the first configuration information to carry one frequencyDomainAllocation field 1, and the fifth CG PUSCH is used as a transmission occasion, one or more CG PUSCHs (for example, the first CG PUSCH) before the fifth CG PUSCH correspond to frequencyDomainAllocation, for example, include 12 RBs (for example, the RB 0 to an RB 11). Optionally, a frequency domain resource of the fifth CG PUSCH may be the same as the frequency domain resource of the first CG PUSCH, for example, includes 12 RBs (for example, the RB 0 to an RB 11). If the second step value may be four RBs, a difference between frequency domain resource sizes of one or more CG PUSCHs (for example, the second CG PUSCH) after the fifth CG PUSCH is an integer multiple of the second step value. For example, if the fifth CG PUSCH is followed by the second CG PUSCH in time domain, the frequency domain resource of the second CG PUSCH includes eight RBs (for example, the RB 0 to an RB 7). Alternatively, the frequency domain resource of the fifth CG PUSCH includes eight RBs (for example, the RB 0 to an RB 7), and by analogy, the frequency domain resource of the second CG PUSCH includes four RBs (for example, the RB 0 to an RB 3).

It should be noted that the foregoing implementations of the frequency domain resource configuration of the plurality of CG PUSCHs are merely examples provided for ease of understanding, and should not constitute any limitation on the technical solution of this application.

The following describes a time domain resource configuration of the M CG PUSCHs.

For example, the M CG PUSCHs include a first CG PUSCH and a second CG PUSCH, and the first CG PUSCH is located before the second CG PUSCH in time domain.

Compared with an existing solution, when a plurality of CG PUSCHs are configured in one CG periodicity, time domain resource sizes corresponding to the plurality of CG PUSCHs on an unlicensed frequency band are the same; and time domain resource sizes corresponding to the plurality of CG PUSCHs on a licensed frequency band may be independently configured to be different. In the foregoing implementation, the CG PUSCHs may be configured with different time domain resources, and as the CG PUSCHs increase, the time domain resources show a monotonically non-increasing trend.

For example, a time domain resource of the first CG PUSCH is different from a time domain resource of the second CG PUSCH. For example, a time domain resource size of the second CG PUSCH is smaller than a time domain resource size of the first CG PUSCH.

Specifically, the network device changes, by changing a quantity (Type 0) of "1" included in a bitmap or changing a size (Type 1) of an allocated RIV field, time domain resource sizes of the M CG PUSCHs allocated to the terminal device. The bitmap and the RIV indicator field may be carried in frequencyDomainAllocation in RRC signaling (namely, the first configuration information), or the bitmap and the RIV indicator field may be carried in DCI. This is not specifically limited in this application.

Compared with an existing solution, when a plurality of CG PUSCHs are configured in one CG periodicity, regardless of whether NR-U or the licensed frequency band is used, time domain resources of the plurality of CG PUSCHs configured by the network device are the same, that is, a bitmap or an RIV field is configured with or indicates one value. In the foregoing implementation, the network device may configure different time domain resources for all CG PUSCHs. As the CG PUSCHs increase, the time domain resources show a monotonically non-increasing trend.

Optionally, a time domain resource position of the second CG PUSCH may be different from a time domain resource position of the first CG PUSCH. For example, the time domain resource of the second CG PUSCH includes a symbol 0 to a symbol 5, and the time domain resource of the first CG PUSCH includes a symbol 6 to a symbol 8.

In this embodiment of this application, a quantity of first CG PUSCHs and a quantity of second CG PUSCHs are not limited. To reduce a resource waste as much as possible, it only needs to ensure that a resource of a later PUSCH (for example, the second CG PUSCH) in time domain is smaller than a resource of an earlier PUSCH (for example, the first CG PUSCH).

In a first implementation, the first configuration information includes eighth indication information, and the eighth indication information indicates time domain resource sizes of the M CG PUSCHs such as the time domain resource size of the first CG PUSCH and the time domain resource size of the second CG PUSCH.

The eighth indication information may be one or m pieces of indication information, and m is greater than 0 and less than or equal to M.

Optionally, the M CG PUSCHs further include the third CG PUSCH, the third CG PUSCH is located before the second CG PUSCH in time domain, and the time domain resource size of the third CG PUSCH is equal to the time domain resource size of the first CG PUSCH.

For example, the eighth indication information may be a timeDomainAllocation field. For example, the network device uses the first configuration information to carry at least m timeDomainAllocation fields. The at least m timeDomainAllocation fields respectively correspond to the M CG PUSCHs, and indicate time domain resource allocation statuses of all of the M CG PUSCHs, or time domain resource allocation statuses of all of the M CG PUSCHs, for example, quantities of included slots or symbols, are indicated by using DCI.

In a second implementation, a difference between the time domain resource size of the first CG PUSCH and the time domain resource size of the second CG PUSCH is an integer multiple of a third step value.

The first configuration information further indicates the time domain resource size of the first CG PUSCH, for example, a quantity of slots or symbols included in the first CG PUSCH.

Optionally, the first configuration information further indicates the third step value; or the third step value is predefined.

Optionally, the terminal device receives ninth indication information. The ninth indication information indicates the third step value. The ninth indication information may be the same as or different from the first configuration information. For example, the ninth indication information may be RRC or DCI.

It should be understood that the third step value is greater than 0. For example, the third step value may be four RBs. If the time domain resource size of the first CG PUSCH is five symbols (for example, a symbol 0 to a symbol 4), the time domain resource size of the second CG PUSCH may be three symbols (for example, a symbol 6 to a symbol 8).

In this implementation, the network device further indicates a relationship between time domain resource sizes of the plurality of CG PUSCHs by indicating the third step value. Compared with the first implementation, in this implementation, signaling overheads can be reduced.

In a third implementation, the first configuration information includes tenth indication information, and the tenth indication information indicates time domain resource sizes of the M CG PUSCHs.

The tenth indication information may be one or m pieces of indication information, and m is greater than 0 and less than or equal to M.

For example, the M CG PUSCHs further include a sixth CG PUSCH, and the sixth CG PUSCH is located between the first CG PUSCH and the second CG PUSCH in time domain.

The first configuration information further indicates that time domain resource sizes of all CG PUSCHs located before the sixth CG PUSCH in time domain are the same as the time domain resource size of the first CG PUSCH, and time domain resource sizes of all CG PUSCHs located after the sixth CG PUSCH in time domain are the same as the time domain resource size of the second CG PUSCH.

Optionally, a time domain resource size of the sixth CG PUSCH is the same as the time domain resource size of the first CG PUSCH, or a time domain resource size of the sixth CG PUSCH is the same as the time domain resource size of the second CG PUSCH.

Optionally, the first configuration information further indicates a position of the sixth CG PUSCH, or a position of the sixth CG PUSCH is predefined.

For example, the tenth indication information may be a timeDomainAllocation field. For example, if the network device uses the first configuration information to carry two timeDomainAllocation fields (for example, timeDomainAllocation 1 and timeDomainAllocation 2), and the sixth CG PUSCH is used as a transmission occasion, one or more CG PUSCHs (for example, the first CG PUSCH) before the sixth CG PUSCH correspond to timeDomainAllocation 1, for example, include five symbols, and one or more CG PUSCHs (for example, the second CG PUSCH) after the sixth CG PUSCH correspond to timeDomainAllocation 2, for example, include three symbols. Optionally, the sixth CG PUSCH may correspond to timeDomainAllocation 1, and include five symbols, or may correspond to timeDomainAllocation 2, and include three symbols. This is not specifically limited in this application.

In a fourth implementation, the first configuration information includes eleventh indication information, and the eleventh indication information indicates the time domain resource size of the first CG PUSCH.

For example, the M CG PUSCHs further include a seventh CG PUSCH, and the seventh CG PUSCH is located between the first CG PUSCH and the second CG PUSCH in time domain.

The first configuration information further indicates that time domain resource sizes of all CG PUSCHs located before the seventh CG PUSCH in time domain are the same as the time domain resource size of the first CG PUSCH, and a difference between time domain resource sizes of all CG PUSCHs located after the seventh CG PUSCH in time domain is an integer multiple of the second step value.

Optionally, a time domain resource size of the seventh CG PUSCH may be the same as the time domain resource size of the first CG PUSCH; or a difference between a time domain resource size of the seventh CG PUSCH and the time domain resource size of the first CG PUSCH is the second step value, and by analogy, a difference between time domain resource sizes of one or more CG PUSCHs located after the seventh CG PUSCH in time domain is an integer multiple of the fourth step value.

Optionally, the first configuration information further indicates the fourth step value; or the fourth step value is predefined.

Optionally, the terminal device receives twelfth indication information. The twelfth indication information indicates the fourth step value. Fourteenth indication information may be the same as or different from the first configuration information. For example, the twelfth indication information may be RRC or DCI.

It should be understood that the fourth step value is greater than 0. For example, the fourth step value may be four symbols. If the time domain resource size of the first CG PUSCH is four symbols (for example, a symbol 0 to a symbol 3), the time domain resource size of the second CG PUSCH may be two symbols (for example, a symbol 7 to a symbol 8), and the time domain resource size of the seventh CG PUSCH may be three symbols (for example, a symbol 4 to a symbol 6).

Optionally, the first configuration information further indicates a position of the seventh CG PUSCH; or a position of the seventh CG PUSCH is predefined.

It should be noted that the foregoing implementations of a time domain resource configuration of the plurality of CG PUSCHs are merely examples provided for ease of understanding, and should not constitute any limitation on the technical solution of this application.

In addition, the foregoing time domain resource configuration and the foregoing frequency domain resource configuration of the M CG PUSCHs may be implemented in combination, or may be implemented independently. Provided that it is ensured as much as possible that a time domain resource and/or a frequency domain resource of a later CG PUSCH in time domain are/is not larger than a time domain resource and/or a frequency domain resource of an earlier CG PUSCH, a resource waste may be reduced as much as possible, and system resource utilization can be improved.

S420: The network device sends the first configuration information to the terminal device.

Correspondingly, the terminal device receives the first configuration information from the network device.

S430: The terminal device sends data on the N CG PUSCHs.

Correspondingly, the network device receives the data on the N CG PUSCHs. N is a positive integer less than or equal to M.

For example, it is assumed that the terminal device determines, based on a data transmission requirement of the terminal device, that the second CG PUSCH is not used, that is, N is less than M. The terminal device may report this case to the network device by using UCI. If the network device has no capability of allocating the unused second PUSCH to another terminal device for data transmission, or cannot allocate, in a timely manner, the unused second PUSCH to another terminal device for data transmission, a resource of the second CG PUSCH is wasted. However, the time domain resource size of the later CG PUSCH in time domain is smaller than the time domain resource size of the earlier CG PUSCH. Therefore, compared with an existing solution, in this implementation, a CG PUSCH resource waste is small. In this way, a resource waste can be reduced, and resource utilization is improved.

For example, it is assumed that the terminal device determines, based on a data transmission requirement of the terminal device, to transmit uplink data on all of the M CG PUSCHs, that is, N is equal to M. In this case, there may be no CG PUSCH resource waste. Compared with the existing solution, a CG PUSCH resource configuration in this implementation is more flexible and more applicable.

According to the technical solution of this application, a plurality of CG PUSCH resources are configured in a CG periodicity, and a frequency domain resource of a later CG PUSCH in time domain is smaller than a frequency domain resource of an earlier CG PUSCH. In other words, frequency domain resources of the plurality of PUSCHs in the CG periodicity correspondingly show a monotonically non-increasing trend. Therefore, even if the terminal device does not use all of the plurality of CG PUSCHs for uplink transmission, and a network device does not allocate, to another terminal device in a timely manner, CG PUSCH resources that are not used by the terminal device, a CG PUSCH resource waste is reduced as much as possible and system resource utilization is improved.

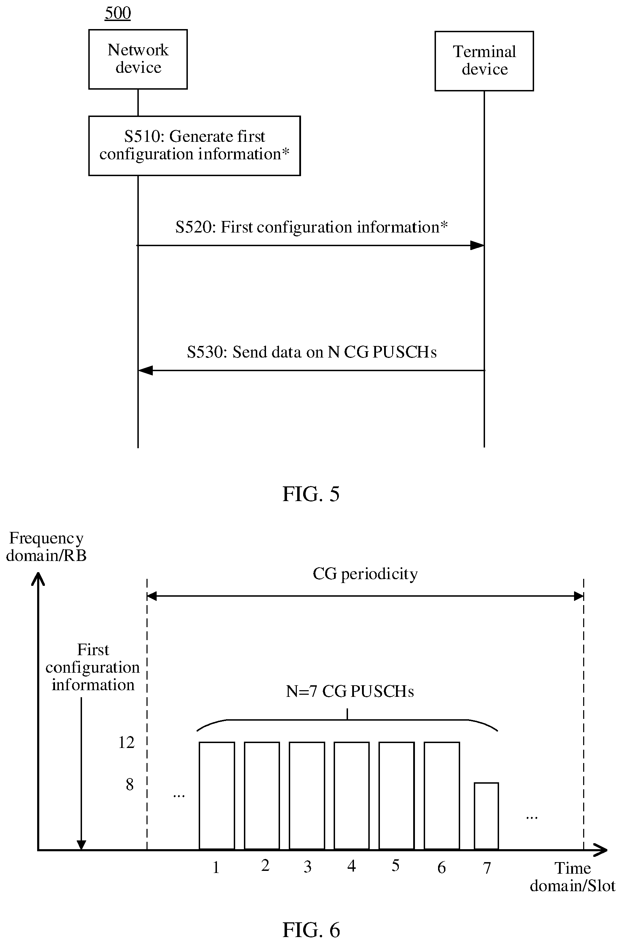

FIG. 5 is a diagram of a communication method 500 according to an embodiment of this application. It should be understood that the communication method 500 may be performed by a communication device (for example, a network device or a terminal device), or may be performed by a chip or a circuit of the communication device, or may be implemented by a logical module or software that can implement all or a part of functions of the communication device. This is not limited in this application. The following describes the technical solutions of this application by using an example in which execution bodies are the network device and the terminal device. As shown in FIG. 5, the method includes the following plurality of steps.

S510: The network device generates first configuration information*.

The first configuration information* indicates M CG PUSCHs in a first CG periodicity, and M is an integer greater than or equal to 2. The M CG PUSCHs include a first CG PUSCH and a second CG PUSCH, the first CG PUSCH is located before the second CG PUSCH in time domain, and a frequency domain resource of the second CG PUSCH is different from a frequency domain resource of the first CG PUSCH.

For example, a frequency domain resource size of the second CG PUSCH is smaller than a frequency domain resource size of the first CG PUSCH.

Optionally, a time domain resource size of the second CG PUSCH is smaller than a time domain resource size of the first CG PUSCH.

In an implementation, the first configuration information includes M pieces of indication information, the M pieces of indication information are in one-to-one correspondence with the M CG PUSCHs, the M pieces of indication information include first indication information and second indication information, the first indication information indicates the frequency domain resource size of the first CG PUSCH, and the second indication information indicates the frequency domain resource size of the second CG PUSCH.

Optionally, the M CG PUSCHs further include a third CG PUSCH, the third CG PUSCH is located before the second CG PUSCH in time domain, and a frequency domain resource size of the third CG PUSCH is equal to the frequency domain resource size of the first CG PUSCH. A time domain resource position of the first CG PUSCH and a time domain resource position of the third CG PUSCH are not limited in this application. To be specific, the first CG PUSCH may be located before the third CG PUSCH in time domain, or may be located after the third CG PUSCH in time domain.

Optionally, the first configuration may alternatively include one piece of indication information (namely, thirteenth indication information), and the indication information indicates frequency domain resource sizes of the M CG PUSCHs such as the frequency domain resource size of the first CG PUSCH and the frequency domain resource size of the second CG PUSCH.

For example, the indication information may be a frequencyDomainAllocation field. For example, the network device uses one frequencyDomainAllocation field to indicate frequency domain resource allocation statuses of the M CG PUSCHs, for example, quantities of included RBs.

Optionally, the M CG PUSCHs further include the third CG PUSCH, the third CG PUSCH is located before the second CG PUSCH in time domain, and the frequency domain resource size of the third CG PUSCH is equal to the frequency domain resource size of the first CG PUSCH.

In another implementation, a difference between the frequency domain resource size of the first CG PUSCH and the frequency domain resource size of the second CG PUSCH is an integer multiple of a first step value. The first configuration information further indicates the frequency domain resource size of the first CG PUSCH.

Optionally, the first configuration information further indicates the first step value; or the first step value is predefined.

Optionally, the terminal device receives third indication information. The third indication information indicates the first step value.

In still another implementation, the first configuration information includes Q pieces of indication information, the Q pieces of indication information include fourth indication information and fifth indication information, the fourth indication information indicates the frequency domain resource size of the first CG PUSCH, the fifth indication information indicates the frequency domain resource size of the second CG PUSCH, and Q is an integer greater than or equal to 2 and less than or equal to M.

For example, the M CG PUSCHs further include a fourth CG PUSCH, and the fourth CG PUSCH is located between the first CG PUSCH and the second CG PUSCH in time domain. The first configuration information further indicates that frequency domain resource sizes of all CG PUSCHs located before the fourth CG PUSCH in time domain are the same as the frequency domain resource size of the first CG PUSCH, and frequency domain resource sizes of all CG PUSCHs located after the fourth CG PUSCH in time domain are the same as the frequency domain resource size of the second CG PUSCH.

Optionally, a frequency domain resource size of the fourth CG PUSCH is the same as the frequency domain resource size of the first CG PUSCH, or a frequency domain resource size of the fourth CG PUSCH is the same as the frequency domain resource size of the second CG PUSCH.

Optionally, the first configuration information further indicates a position of the fourth CG PUSCH, or a position of the fourth CG PUSCH is predefined.

Optionally, the first configuration may include one piece of indication information, and the indication information indicates frequency domain resource sizes of the M CG PUSCHs such as the frequency domain resource size of the first CG PUSCH and the frequency domain resource size of the second CG PUSCH.

Optionally, the M CG PUSCHs further include the fourth CG PUSCH, the fourth CG PUSCH is located between the first CG PUSCH and the second CG PUSCH in time domain, and the first configuration information further indicates that the frequency domain resource sizes of all the CG PUSCHs located before the fourth CG PUSCH in time domain are the same as the frequency domain resource size of the first CG PUSCH, and the frequency domain resource sizes of all the CG PUSCHs located after the fourth CG PUSCH in time domain are the same as the frequency domain resource size of the second CG PUSCH.

For example, the indication information may be a frequencyDomainAllocation field. For example, the network device configures one frequencyDomainAllocation field to indicate frequency domain resource allocation statuses of the M CG PUSCHs, for example, quantities of included RBs.

In still another implementation, the first configuration information includes sixth indication information, and the sixth indication information indicates the frequency domain resource size of the first CG PUSCH.

For example, the M CG PUSCHs further include a fifth CG PUSCH, and the fifth CG PUSCH is located between the first CG PUSCH and the second CG PUSCH in time domain. The first configuration information further indicates that frequency domain resource sizes of all CG PUSCHs located before the fifth CG PUSCH in time domain are the same as the frequency domain resource size of the first CG PUSCH, and a difference between frequency domain resource sizes of all CG PUSCHs located after the fifth CG PUSCH in time domain is an integer multiple of a second step value.

Optionally, the first configuration information further indicates the second step value; or the second step value is predefined.

Optionally, the terminal device receives seventh indication information. The seventh indication information indicates the first step value. The seventh indication information may be the same as or different from the first configuration information.

Optionally, the first configuration information further indicates a position of the fifth CG PUSCH, or a position of the fifth CG PUSCH is predefined.

In still another implementation, the first configuration information includes eighth indication information, and the eighth indication information indicates time domain resource sizes of the M CG PUSCHs such as the time domain resource size of the first CG PUSCH and the time domain resource size of the second CG PUSCH.

The eighth indication information may be one or m pieces of indication information, and m is greater than 0 and less than or equal to M. Optionally, the M CG PUSCHs further include a third CG PUSCH, the third CG PUSCH is located before the second CG PUSCH in time domain, and a time domain resource size of the third CG PUSCH is equal to the time domain resource size of the first CG PUSCH.

In still another implementation, a difference between the time domain resource size of the first CG PUSCH and the time domain resource size of the second CG PUSCH is an integer multiple of a third step value. The first configuration information further indicates the time domain resource size of the first CG PUSCH, for example, a quantity of slots or symbols included in the first CG PUSCH.

Optionally, the first configuration information further indicates the third step value; or the third step value is predefined.

Optionally, the terminal device receives ninth indication information. The ninth indication information indicates the third step value. Tenth indication information may be the same as or different from the first configuration information. For example, the ninth indication information may be RRC or DCI.

In still another implementation, the first configuration information includes tenth indication information, and the tenth indication information indicates time domain resource sizes of the M CG PUSCHs.

The tenth indication information may be one or m pieces of indication information, and m is greater than 0 and less than or equal to M.

For example, the M CG PUSCHs further include a sixth CG PUSCH, and the sixth CG PUSCH is located between the first CG PUSCH and the second CG PUSCH in time domain. The first configuration information further indicates that time domain resource sizes of all CG PUSCHs located before the sixth CG PUSCH in time domain are the same as the time domain resource size of the first CG PUSCH, and time domain resource sizes of all CG PUSCHs located after the sixth CG PUSCH in time domain are the same as the time domain resource size of the second CG PUSCH.

In still another implementation, the first configuration information includes eleventh indication information, and the eleventh indication information indicates the time domain resource size of the first CG PUSCH.

For example, the M CG PUSCHs further include a seventh CG PUSCH, and the seventh CG PUSCH is located between the first CG PUSCH and the second CG PUSCH in time domain. The first configuration information further indicates that time domain resource sizes of all CG PUSCHs located before the seventh CG PUSCH in time domain are the same as the time domain resource size of the first CG PUSCH, and a difference between time domain resource sizes of all CG PUSCHs located after the seventh CG PUSCH in time domain is an integer multiple of the second step value.

In still another implementation, the first configuration information further indicates the fourth step value; or the fourth step value is predefined. Optionally, twelfth indication information is received. The twelfth indication information indicates the fourth step value.

S520: The network device sends the first configuration information* to the terminal device.

Correspondingly, the terminal device receives the first configuration information* from the network device.

S530: The terminal device sends data on N CG PUSCHs.

Correspondingly, the network device receives the data on the N CG PUSCHs. N is a positive integer less than or equal to M.

For specific implementations of steps S510 to S530, refer to steps S410 to S430 in the method 400. For brevity, details are not described herein again.

According to the technical solution of this application, a plurality of CG PUSCH resources are configured in a CG periodicity, and a frequency domain resource of a later CG PUSCH in time domain is smaller than a frequency domain resource of an earlier CG PUSCH. In other words, frequency domain resources of the plurality of PUSCHs in the CG periodicity correspondingly show a monotonically non-increasing trend. Therefore, even if the terminal device does not use all of the plurality of CG PUSCHs for uplink transmission, and a network device does not allocate, to another terminal device in a timely manner, CG PUSCH resources that are not used by the terminal device, a CG PUSCH resource waste is reduced as much as possible and system resource utilization is improved.

FIG. 6 to FIG. 9 each are a diagram of a resource configuration of a plurality of CG PUSCHs according to an embodiment of this application. One CG periodicity is used as an example, and an example in which a time domain unit is a slot and a frequency domain unit is an RB is used to specifically describe CG PUSCH configuration and use. It is assumed that a network device may configure M CG PUSCHs in one CG periodicity by using the first configuration information, so that a terminal device transmits uplink data. The terminal device may perform CG transmission on N=7 CG PUSCHs. This also indicates that at least seven CG PUSCHs are configured by using the first configuration information. A ranking of a CG PUSCH from which the terminal device starts to transmit data in the M CG PUSCHs is not specifically limited in this application. It should be understood that FIG. 6 to FIG. 9 are merely examples provided for ease of understanding, and a value of N is merely an example, and should not constitute any limitation on the technical solution of this application.

As shown in FIG. 6, the network device may use M frequencyDomainAllocation fields to respectively indicate frequency domain resource allocation statuses of the M CG PUSCHs. Alternatively, the network device may use one frequencyDomainAllocation field to indicate frequency domain resource allocation statuses of the M CG PUSCHs. Optionally, subsequently, the terminal device may determine, based on a volume of to-be-transmitted data, to send data on one or more previous CG PUSCHs. For example, a first CG PUSCH may be a CG PUSCH 1 to a CG PUSCH 6, and a quantity of included RBs is 12; and a second CG PUSCH may be a CG PUSCH 7, and a quantity of included RBs is 8. It can be learned that the second CG PUSCH is located after the first CG PUSCH in time domain, and a frequency domain resource size of the second CG PUSCH is smaller than a frequency domain resource size of the first CG PUSCH. For another example, a first CG PUSCH may be a CG PUSCH 1 to a CG PUSCH 3, a second CG PUSCH may be a PUSCH 7, and a third CG PUSCH may be a CG PUSCH 4 to a CG PUSCH 6. For another example, a third CG PUSCH may be a CG PUSCH 1, a second CG PUSCH may be a PUSCH 7, and a first CG PUSCH may be a CG PUSCH 2 to a CG PUSCH 6. It can be learned that a frequency domain resource size of the first CG PUSCH is the same as a frequency domain resource size of the third CG PUSCH, and is larger than a frequency domain resource size of the second CG PUSCH.

Optionally, time domain resource sizes of the CG PUSCH 1 to the CG PUSCH 6 may not be completely the same, or may be completely different. This is not limited in this application, provided that it is ensured as much as possible that a time domain resource size of the CG PUSCH 7 is smaller than or equal to the time domain resource sizes of first six CG PUSCHs as much as possible.

For example, the network device may use m timedomainAllocation fields to respectively indicate time domain resource allocation statuses of the M CG PUSCHs. Alternatively, the network device may use one timedomainAllocation field to indicate the time domain resource allocation statuses of the M CG PUSCHs. For example, the network device configures a TDAR table by using RRC, RRC indicates (CG type 1) or DCI indicates (CG type 2) a specific row in the table, the row corresponds to SLIV fields of the plurality of PUSCHs, and time domain resource sizes corresponding to these SLIV fields show a monotonically non-increasing trend. For example, a first CG PUSCH may be a CG PUSCH 1 to a CG PUSCH 6, each occupying two symbols, and a second CG PUSCH may be a CG PUSCH 7, each occupying one symbol. Specifically, the CG PUSCH 1 occupies a symbol 0 and a symbol 1, a CG PUSCH 2 occupies a symbol 2 and a symbol 3, and by analogy, the CG PUSCH 6 occupies a symbol 10 and a symbol 11, and the CG PUSCH 7 occupies a symbol 12. It can be learned that the second CG PUSCH is located after the first CG PUSCH in time domain, a time domain resource size of the second CG PUSCH is smaller than a time domain resource size of the first CG PUSCH, and a frequency domain resource size of the second CG PUSCH is smaller than a frequency domain resource size of the first CG PUSCH. For another example, a first CG PUSCH may be a CG PUSCH 1 to a CG PUSCH 3, a second CG PUSCH may be a PUSCH 7, and a third CG PUSCH may be a CG PUSCH 4 to a CG PUSCH 6. For another example, a third CG PUSCH may be a CG PUSCH 1, a second CG PUSCH may be a PUSCH 7, and a first CG PUSCH may be a CG PUSCH 2 to a CG PUSCH 6. It can be learned that a time domain resource size of the first CG PUSCH is the same as a time domain resource size of the third CG PUSCH, and is larger than a time domain resource size of the second CG PUSCH.

In conclusion, in this implementation, a time domain resource of the second CG PUSCH is smaller than time domain resource sizes of all CG PUSCHs located before the second CG PUSCH. As a quantity of CG PUSCHs increases in time domain, time domain resource sizes of the seven CG PUSCHs show a monotonically non-increasing trend.

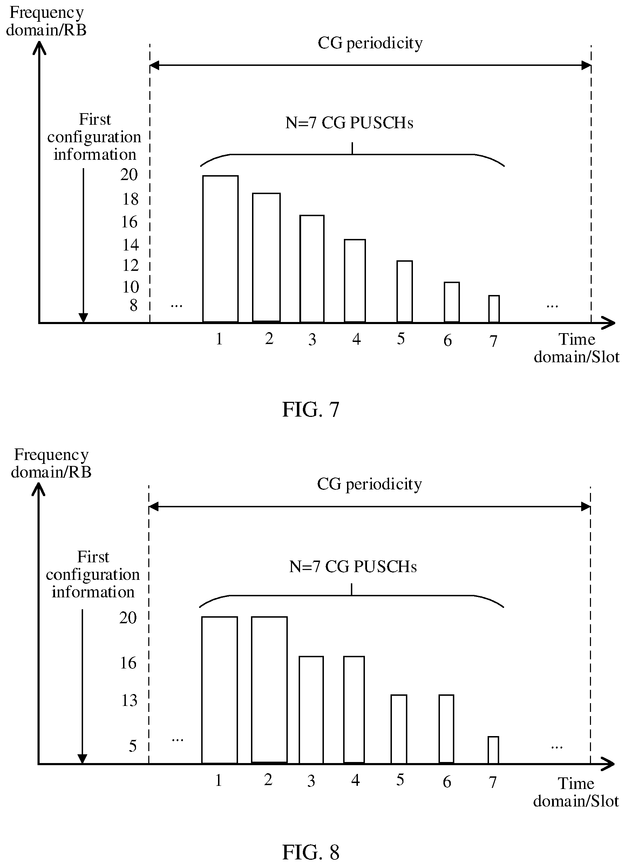

As shown in FIG. 7, the network device may use a newly added field to indicate a step value x between frequency domain resources of two adjacent CG PUSCHs. For example, x=2 RBs. Optionally, subsequently, the terminal device may determine, based on a volume of to-be-transmitted data, to send data on one or more previous CG PUSCHs. For example, a first CG PUSCH may be a CG PUSCH 1, and a quantity of included RBs is 20; and a second CG PUSCH may be a CG PUSCH 7, and a quantity of included RBs is 8. Optionally, a third CG PUSCH may be any one of a CG PUSCH 2 to a CG PUSCH 6, for example, a CG PUSCH 3, and a quantity of included RBs is 16. It can be learned that the third CG PUSCH is located between the first CG PUSCH and the second CG PUSCH in time domain, and a time/frequency domain resource size of the third CG PUSCH is between a time/frequency domain resource size of the first CG PUSCH and a time/frequency domain resource size of the second CG PUSCH. For another example, a first CG PUSCH may be a CG PUSCH 5, and a quantity of included RBs is 12; and a second CG PUSCH may be a CG PUSCH 7, and a quantity of included RBs is 8. Optionally, a third CG PUSCH may be any one of a CG PUSCH 1 to a CG PUSCH 4, for example, a CG PUSCH 2, and a quantity of included RBs is 18. It can be learned that the third CG PUSCH is located before the first CG PUSCH in time domain, and a time/frequency domain resource size of the first CG PUSCH is between a time/frequency domain resource size of the third CG PUSCH and a time/frequency domain resource size of the second CG PUSCH.

Optionally, time domain resource sizes of the CG PUSCH 1 to the CG PUSCH 7 may also be considered to be configured by using a step value y, for example, y=2 symbols, in a monotonically non-increasing manner.

Optionally, time domain resource sizes of the CG PUSCH 1 to the CG PUSCH 6 may be completely the same, or may be partially the same. This is not limited in this application, provided that it is ensured as much as possible that the time domain resource sizes of the CG PUSCH 1 to the CG PUSCH 6 are larger than or equal to a time domain resource sizes of the CG PUSCH 7.

For example, the network device may use a newly added field (for example, an RRC configuration field, a DCI indication field, or a predefined field) to indicate a step value y between time domain resources of two adjacent CG PUSCHs. For example, y=1 symbol. Optionally, subsequently, the terminal device may determine, based on a volume of to-be-transmitted data, to send data on one or more previous CG PUSCHs. For example, a first CG PUSCH may be a CG PUSCH 1, and a quantity of included symbols is 7; and a second CG PUSCH may be a CG PUSCH 7, and a quantity of included symbols is 1. Optionally, a third CG PUSCH may be any one of a CG PUSCH 2 to a CG PUSCH 6, for example, a CG PUSCH 3, and a quantity of included symbols is 5. It can be learned that the third CG PUSCH is located between the first CG PUSCH and the second CG PUSCH in time domain, and a time/frequency domain resource size of the third CG PUSCH is between a time/frequency domain resource size of the first CG PUSCH and a time/frequency domain resource size of the second CG PUSCH. For another example, a first CG PUSCH may be a CG PUSCH 5, and a quantity of included symbols is 4; and a second CG PUSCH may be a CG PUSCH 7, and a quantity of included symbols is 2. Optionally, a third CG PUSCH may be any one of a CG PUSCH 1 to a CG PUSCH 4, for example, a CG PUSCH 2, and a quantity of included symbols is 7. It can be learned that the third CG PUSCH is located before the first CG PUSCH in time domain, and a time/frequency domain resource size of the first CG PUSCH is between a time/frequency domain resource size of the third CG PUSCH and a time/frequency domain resource size of the second CG PUSCH.

In conclusion, in this implementation, a time domain resource of the second CG PUSCH is smaller than time domain resource sizes of all CG PUSCHs located before the second CG PUSCH. As a quantity of CG PUSCHs increases in time domain, time domain resource sizes of the seven CG PUSCHs show a monotonically non-increasing trend.

As shown in FIG. 8, the network device may use a plurality of frequencyDomainAllocation fields to indicate frequency domain resource sizes of a plurality of groups of CG PUSCHs, and each group of CG PUSCHs includes one or more CG PUSCHs. Optionally, subsequently, the terminal device may determine, based on a volume of to-be-transmitted data, to send data on one or more previous CG PUSCHs. For example, a first CG PUSCH may be a CG PUSCH 3 and a CG PUSCH 4, and a quantity of included RBs is 16; and a second CG PUSCH may be a CG PUSCH 7, and a quantity of included RBs is 5. Optionally, a third CG PUSCH may be a CG PUSCH 1 and a CG PUSCH 2, and a quantity of included RBs is 20; or a third CG PUSCH may be a CG PUSCH 5 and a CG PUSCH 6, and a quantity of included RBs is 13. It can be learned that the second CG PUSCH is located after the first CG PUSCH and the third CG PUSCH in time domain, and a quantity of RBs included in the second CG PUSCH is less than both a quantity of RBs included in the first CG PUSCH and a quantity of RBs included in the third CG PUSCH.

Optionally, time domain resource sizes of the CG PUSCH 1 and the CG PUSCH 2 are the same, time domain resource sizes of the CG PUSCH 3 and the CG PUSCH 4 are the same, and time domain resource sizes of the CG PUSCH 5 and the CG PUSCH 6 are the same. Time domain resource sizes of each group of CG PUSCHs may also be considered to be configured by using a step value z, for example, z=3 symbols, in a monotonically non-increasing manner.

Optionally, time domain resource sizes of the CG PUSCH 1 to the CG PUSCH 6 may be completely the same, or may be partially the same. Time domain resource sizes of the CG PUSCH 1 to the CG PUSCH 4 are the same, and are larger than time domain resource sizes of the CG PUSCH 5 and the CG PUSCH 6. This is not limited in this application, provided that it is ensured as much as possible that the time domain resource sizes of the CG PUSCH 1 to the CG PUSCH 6 are larger than or equal to a time domain resource size of the CG PUSCH 7.

For example, the network device may use a plurality of timedomainAllocation fields to indicate time domain resource sizes of a plurality of groups of CG PUSCHs, and each group of CG PUSCHs includes one or more CG PUSCHs. Alternatively, the network device may use one timedomainAllocation field to indicate a specific row in a TDAR table. The row includes time domain resource sizes of a plurality of groups of CG PUSCHs, and each group of CG PUSCHs includes one or more CG PUSCHs. Optionally, subsequently, the terminal device may determine, based on a volume of to-be-transmitted data, to send data on one or more previous CG PUSCHs. For example, a first CG PUSCH may be a CG PUSCH 3 and a CG PUSCH 4, each including three symbols; and a second CG PUSCH may be a CG PUSCH 7, including one symbol. Optionally, a third CG PUSCH may be a CG PUSCH 1 and a CG PUSCH 2, each including four symbols; or a third CG PUSCH may be a CG PUSCH 5 and a CG PUSCH 6, each including two symbols. It can be learned that the second CG PUSCH is located after the first CG PUSCH and the third CG PUSCH in time domain, and a quantity of symbols included in the second CG PUSCH is less than both a quantity of symbols included in the first CG PUSCH and a quantity of symbols included in the third CG PUSCH.

In conclusion, in this implementation, a time domain resource of the second CG PUSCH is smaller than time domain resource sizes of all CG PUSCHs located before the second CG PUSCH. As a quantity of CG PUSCHs increases in time domain, time domain resource sizes of the seven CG PUSCHs show a monotonically non-increasing trend.

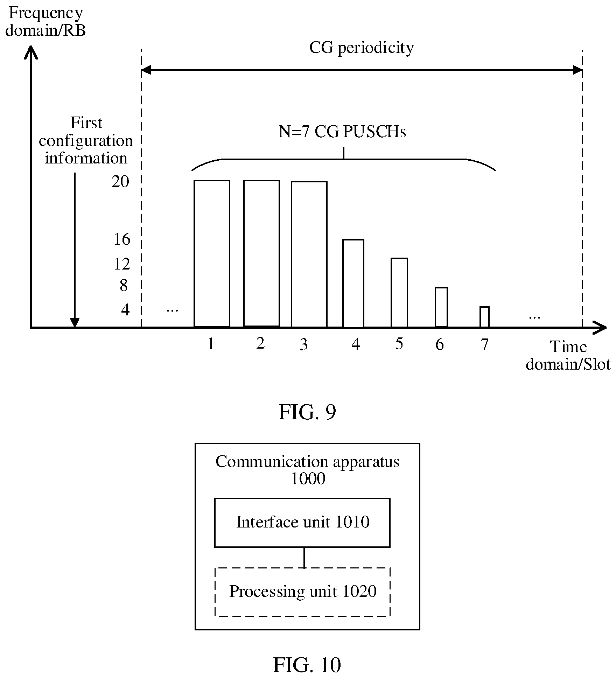

As shown in FIG. 9, the network device may use one frequencyDomainAllocation field to indicate that frequency domain resource sizes of all CG PUSCHs before one CG PUSCH (for example, the third CG PUSCH) are the same, and the frequency domain resource sizes is 20 RBs, and indicate to configure frequency domain resources of the CG PUSCH (for example, the third CG PUSCH) and all CG PUSCHs after the CG PUSCH by using a step value k, for example, k=4 RBs, in a monotonically increasing manner. Optionally, subsequently, the terminal device may determine, based on a volume of to-be-transmitted data, to send data on one or more previous CG PUSCHs. For example, the third CG PUSCH may be a CG PUSCH 4, and a quantity of included RBs is 16. In this case, quantities of RBs included in a CG PUSCH 1 to a CG PUSCH 3 are 20. In addition, a quantity of RBs included in a CG PUSCH 5 is 12, a quantity of RBs included in a CG PUSCH 6 is 8, and a quantity of RBs included in a CG PUSCH 7 is 4. Optionally, a first CG PUSCH may be the CG PUSCH 1 and a CG PUSCH 2. In this case, a second CG PUSCH may be any one of the CG PUSCH 5 to the CG PUSCH 7. Alternatively, a first CG PUSCH may be the CG PUSCH 5 or the CG PUSCH 6. In this case, a second CG PUSCH is the CG PUSCH 7. It can be learned that the second CG PUSCH is located after the first CG PUSCH and the third CG PUSCH in time domain, and a quantity of RBs included in the second CG PUSCH is less than both a quantity of RBs included in the first CG PUSCH and a quantity of RBs included in the third CG PUSCH.

Optionally, time domain resource sizes of the CG PUSCH 1 to the CG PUSCH 6 may be completely the same, or may be partially the same. This is not limited in this application, provided that it is ensured as much as possible that time domain resource sizes of the first CG PUSCH and the third CG PUSCH are larger than or equal to a time domain resource size of the second CG PUSCH.

For example, the network device may use one timedomainAllocation field to indicate that frequency domain resource sizes of all CG PUSCHs before one CG PUSCH (for example, the third CG PUSCH) are the same, and a quantity of included symbols is 4, and indicate to configure time domain resources of the CG PUSCH (for example, the third CG PUSCH) and all CG PUSCHs after the CG PUSCH by using a step value k, for example, k=1 symbol, in a monotonically increasing manner. Optionally, subsequently, the terminal device may determine, based on a volume of to-be-transmitted data, to send data on one or more previous CG PUSCHs. For example, the third CG PUSCH may be a CG PUSCH 4, and a quantity of included symbols is 4; and correspondingly, quantities of symbols included in a CG PUSCH 1 to a CG PUSCH 3 may be 6. In addition, based on the step value k=1, a quantity of symbols included in a CG PUSCH 5 is 3, a quantity of symbols included in a CG PUSCH 6 is 2, and a quantity of symbols included in a CG PUSCH 7 is 1. Optionally, a first CG PUSCH may be the CG PUSCH 1 and a CG PUSCH 2. In this case, a second CG PUSCH may be any one of the CG PUSCH 5 to the CG PUSCH 7. Alternatively, a first CG PUSCH may be the CG PUSCH 5 or the CG PUSCH 6. In this case, a second CG PUSCH is the CG PUSCH 7. It can be learned that the second CG PUSCH is located after the first CG PUSCH and the third CG PUSCH in time domain, and a quantity of symbols included in the second CG PUSCH is less than both a quantity of symbols included in the first CG PUSCH and a quantity of symbols included in the third CG PUSCH.

In conclusion, in this implementation, a time domain resource of the second CG PUSCH is smaller than time domain resource sizes of all CG PUSCHs located before the second CG PUSCH. As a quantity of CG PUSCHs increases in time domain, time domain resource sizes of the seven CG PUSCHs show a monotonically non-increasing trend.

According to the technical solution of this application, a plurality of CG PUSCH resources are configured in a CG periodicity, and a frequency domain resource of a later CG PUSCH in time domain is smaller than a frequency domain resource of an earlier CG PUSCH. In other words, frequency domain resources of the plurality of CG PUSCHs in the CG periodicity correspondingly show a monotonically non-increasing trend. Therefore, even if the terminal device does not use all of the plurality of CG PUSCHs for uplink transmission, and a network device does not allocate, to another terminal device in a timely manner, CG PUSCH resources that are not used by the terminal device, a CG PUSCH resource waste is reduced as much as possible and system resource utilization is improved.

The foregoing describes the method embodiments in embodiments of this application with reference to the accompanying drawings, and the following describes apparatus embodiments in embodiments of this application. It may be understood that the descriptions of the method embodiments and the descriptions of the apparatus embodiments may correspond to each other. Therefore, for a part that is not described, refer to the foregoing method embodiments.

The foregoing mainly describes the solutions provided in embodiments of this application from a perspective of interaction between network elements. It may be understood that, to implement the foregoing functions, each network element such as a transmitter device or a receiver device includes a corresponding hardware structure and/or software module for performing each function. A person skilled in the art may be aware that, with reference to the examples described in embodiments disclosed in this specification, units and algorithm steps can be implemented by hardware or a combination of hardware and computer software in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, functional modules of a transmitter device or a receiver device may be obtained through division based on the foregoing method examples. For example, each functional module may be obtained through division based on each function, or two or more functions may be integrated into one processing module. The integrated module may be implemented in a form of hardware, or may be implemented in a form of a software functional module. It should be noted that, in embodiments of this application, module division is an example, and is merely a logical function division. During actual implementation, another division manner may be used. An example in which each functional module is obtained through division based on each corresponding function is used below for description.

FIG. 10 is a schematic block diagram of a communication apparatus 1000 according to an embodiment of this application. As shown in FIG. 10, the apparatus 1000 may include an interface unit 1010 and a processing unit 1020. The interface unit 1010 may communicate with the outside, and the processing unit 1020 is configured to process data. The interface unit 1010 may also be referred to as a communication interface or a transceiver unit.

In a possible design, the apparatus 1000 may implement steps or procedures performed by a terminal device in the foregoing method embodiments. The processing unit 1020 is configured to perform a processing-related operation of the terminal device in the foregoing method embodiments. The interface unit 1010 is configured to perform a receiving/sending-related operation of the terminal device in the foregoing method embodiments.

In another possible design, the apparatus 1000 may implement steps or procedures performed by a network device in the foregoing method embodiments. The processing unit 1020 is configured to perform a processing-related operation of the network device in the foregoing method embodiments. The interface unit 1010 is configured to perform a receiving/sending-related operation of the network device in the foregoing method embodiments.

It should be understood that the device 1000 herein is implemented in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art can understand that the device 1000 may be specifically a transmitting end in the foregoing embodiments, and may be configured to perform procedures and/or steps corresponding to the transmitting end in the foregoing method embodiments; or the device 1000 may be specifically a receiving end in the foregoing embodiments, and may be configured to perform procedures and/or steps corresponding to the receiving end in the foregoing method embodiments. To avoid repetition, details are not described herein again.

The device 1000 in the foregoing solutions has a function of implementing corresponding steps performed by the transmitting end in the foregoing methods. Alternatively, the device 1000 in the foregoing solutions has a function of implementing corresponding steps performed by the receiving end in the foregoing methods. The function may be implemented by hardware, or may be implemented by executing corresponding software by hardware. The hardware or the software includes one or more modules corresponding to the foregoing functions. For example, the interface unit may be replaced with a transceiver (for example, a sending unit in the interface unit may be replaced with a transmitter, and a receiving unit in the interface unit may be replaced with a receiver), and another unit, for example, the processing unit, may be replaced with a processor, to separately perform receiving/sending operations and related processing operations in the method embodiments.

In addition, the interface unit may alternatively be a transceiver circuit (for example, may include a receiving circuit and a sending circuit), and the processing unit may be a processing circuit. In this embodiment of this application, the apparatus in FIG. 10 may be the receiving end or the transmitting end in the foregoing embodiments, or may be a chip or a chip system, for example, a system on chip (system on chip, SoC). The interface unit may be an input/output circuit or a communication interface. The processing unit is a processor, a microprocessor, or an integrated circuit integrated on the chip. This is not limited herein.

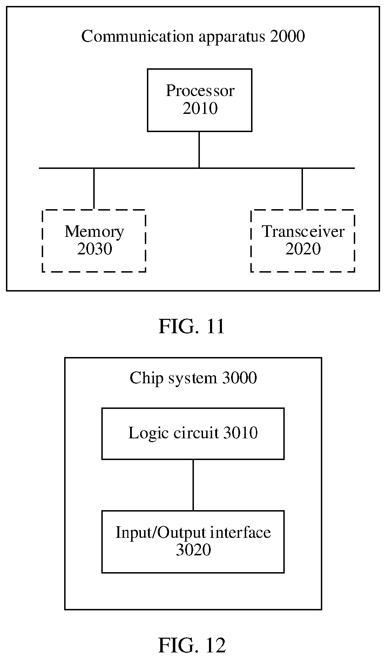

FIG. 11 is a schematic block diagram of a communication apparatus 2000 according to an embodiment of this application. As shown in FIG. 11, the apparatus 2000 includes a processor 2010 and a transceiver 2020. The processor 2010 and the transceiver 2020 communicate with each other through an internal connection path. The processor 2010 is configured to execute instructions, to control the transceiver 2020 to send a signal and/or receive a signal.

Optionally, the apparatus 2000 may further include a memory 2030. The memory 2030 communicates with the processor 2010 and the transceiver 2020 through internal connection paths. The memory 2030 is configured to store instructions, and the processor 2010 may execute the instructions stored in the memory 2030.

In a possible implementation, the apparatus 2000 is configured to implement procedures and steps corresponding to the terminal device in the foregoing method embodiments.

For example, the transceiver 2020 is configured to perform receiving/sending-related operations of the terminal device in the foregoing method embodiments.

In another possible implementation, the apparatus 2000 is configured to implement procedures and steps corresponding to the network device in the foregoing method embodiments.

It should be understood that the device 2000 may be specifically a transmitting end or a receiving end in the foregoing embodiments, or may be a chip or a chip system. Correspondingly, the transceiver 2020 may be a transceiver circuit of the chip. This is not limited herein. Specifically, the device 2000 may be configured to perform steps and/or procedures corresponding to the transmitting end or the receiving end in the foregoing method embodiments.

Optionally, the memory 2030 may include a read-only memory and a random access memory, and provide instructions and data to the processor. A part of the memory may further include a nonvolatile random access memory. For example, the memory may further store information of a device type. The processor 2010 may be configured to execute the instructions stored in the memory. When the processor 2010 executes the instructions stored in the memory, the processor 2010 is configured to perform steps and/or procedures in the foregoing method embodiments corresponding to the transmitting end or the receiving end.

In an implementation process, steps in the foregoing methods can be implemented by using a hardware integrated logic circuit in the processor, or by using instructions in a form of software. The steps in the methods disclosed with reference to embodiments of this application may be directly performed and completed by a hardware processor, or may be performed and completed by using a combination of hardware in the processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, steps in the foregoing method embodiments can be implemented by using a hardware integrated logic circuit in the processor, or by using instructions in a form of software. The processor may be a general-purpose processor, a digital signal processor, an application-specific integrated circuit, a field programmable gate array or another programmable logic device, a discrete gate or transistor logic device, or a discrete hardware component. The processor in embodiments of this application may implement or perform the methods, the steps, and the logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It may be understood that the memory in this embodiment of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), and a synchronous dynamic random access memory (synchronous DRAM, SDRAM). It should be noted that the memory of the systems and methods described in this specification includes but is not limited to these and any memory of another proper type.

FIG. 12 is a schematic block diagram of a chip system 3000 according to an embodiment of this application. As shown in FIG. 12, the chip system 3000 (which may also be referred to as a processing system) includes a logic circuit 3010 and an input/output interface (input/output interface) 3020.

The logic circuit 3010 may be a processing circuit in the chip system 3000. The logic circuit 3010 may be coupled and connected to a storage unit, and invoke instructions in the storage unit, so that the chip system 3000 can implement the methods and the functions in embodiments of this application. The input/output interface 3020 may be an input/output circuit in the chip system 3000, and outputs information processed by the chip system 3000, or inputs to-be-processed data or signaling information to the chip system 3000 for processing.

In a solution, the chip system 3000 is configured to implement operations performed by a terminal device in the foregoing method embodiments.

For example, the logic circuit 3010 is configured to implement a processing-related operation performed by the terminal device in the foregoing method embodiments, for example, a processing-related operation performed by the terminal device in the embodiment shown in FIG. 4 or FIG. 5. The input/output interface 3020 is configured to implement a sending and/or receiving-related operation performed by the terminal device in the foregoing method embodiments, for example, a sending and/or receiving-related operation performed by the terminal device in the embodiment shown in FIG. 4 or FIG. 5.

An embodiment of this application further provides a computer-readable storage medium. The computer-readable storage medium stores computer instructions used to implement all or a part of the steps of the method performed by the terminal device or the network device in the foregoing method embodiments. The storage medium in this application includes any medium that can store program code, such as a USB flash drive, a removable hard disk, a read-only memory, a random access memory, a magnetic disk, or an optical disc.

An embodiment of this application further provides a computer program product, including instructions. When the instructions are executed by a computer, the methods performed by the terminal device and the network device in the foregoing method embodiments are implemented.

An embodiment of this application further provides a communication system. The communication system includes the network device in the foregoing embodiments and a second network device. Optionally, the communication system further includes the terminal device in the foregoing embodiments.

For explanations and beneficial effect of related content of any one of the apparatuses provided above, refer to the corresponding method embodiment provided above. Details are not described herein again.

A person of ordinary skill in the art may be aware that, with reference to the examples described in embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual conditions to achieve the objectives of the solutions in embodiments.

In addition, functional units in embodiments of this application may be integrated into one processing unit, or each unit may exist alone physically, or two or more units may be integrated into one unit.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method is applied to a terminal device, and the method comprises:
receiving first configuration information, wherein the first configuration information is used to configure M configured grant, CG, physical uplink shared channels, PUSCHs, in a first CG periodicity, the M CG PUSCHs comprise a first CG PUSCH and a second CG PUSCH, the first CG PUSCH is located before the second CG PUSCH in time domain, a time domain resource size of the second CG PUSCH is smaller than a time domain resource size of the first CG PUSCH, and M is an integer greater than or equal to 2; and
sending data on N CG PUSCHs, wherein N is a positive integer less than or equal to M.

2. The method according to claim 1, wherein a frequency domain resource size of the second CG PUSCH is smaller than a frequency domain resource size of the first CG PUSCH.

3. The method according to claim 2, wherein the first configuration information comprises M pieces of indication information, the M pieces of indication information are in one-to-one correspondence with the M CG PUSCHs, the M pieces of indication information comprise first indication information and second indication information, the first indication information indicates the frequency domain resource size of the first CG PUSCH, and the second indication information indicates the frequency domain resource size of the second CG PUSCH.

4. The method according to claim 3, wherein the M CG PUSCHs further comprise a third CG PUSCH, the third CG PUSCH is located before the second CG PUSCH in time domain, and a frequency domain resource size of the third CG PUSCH is equal to the frequency domain resource size of the first CG PUSCH.

5. The method according to claim 2, wherein a difference between the frequency domain resource size of the first CG PUSCH and the frequency domain resource size of the second CG PUSCH is an integer multiple of a first step value; and
the first configuration information further indicates the frequency domain resource size of the first CG PUSCH.

6. The method according to claim 5, wherein
the first configuration information is further used to configure the first step value; or
the first step value is predefined; or
the method further comprises: receiving third indication information, wherein the third indication information indicates the first step value.

7. The method according to claim 2, wherein the first configuration information comprises Q pieces of indication information, the Q pieces of indication information comprise fourth indication information and fifth indication information, the fourth indication information indicates the frequency domain resource size of the first CG PUSCH, the fifth indication information indicates the frequency domain resource size of the second CG PUSCH, and Q is an integer greater than or equal to 2 and less than or equal to M; and
the M CG PUSCHs further comprise a fourth CG PUSCH, the fourth CG PUSCH is located between the first CG PUSCH and the second CG PUSCH in time domain, and the first configuration information further indicates that frequency domain resource sizes of all CG PUSCHs located before the fourth CG PUSCH in time domain are the same as the frequency domain resource size of the first CG PUSCH, and frequency domain resource sizes of all CG PUSCHs located after the fourth CG PUSCH in time domain are the same as the frequency domain resource size of the second CG PUSCH.

8. The method according to claim 7, wherein a frequency domain resource size of the fourth CG PUSCH is the same as the frequency domain resource size of the first CG PUSCH, or a frequency domain resource size of the fourth CG PUSCH is the same as the frequency domain resource size of the second CG PUSCH.

9. The method according to claim 7 or 8, wherein the first configuration information further indicates a position of the fourth CG PUSCH, or a position of the fourth CG PUSCH is predefined.

10. The method according to claim 2, wherein the first configuration information comprises sixth indication information, and the sixth indication information indicates the frequency domain resource size of the first CG PUSCH; and
the M CG PUSCHs further comprise a fifth CG PUSCH, the fifth CG PUSCH is located between the first CG PUSCH and the second CG PUSCH in time domain, and the first configuration information further indicates that frequency domain resource sizes of all CG PUSCHs located before the fifth CG PUSCH in time domain are the same as the frequency domain resource size of the first CG PUSCH, and a difference between frequency domain resource sizes of all CG PUSCHs located after the fifth CG PUSCH in time domain is an integer multiple of a second step value.

11. The method according to claim 10, wherein the first configuration information further indicates the second step value; or the second step value is predefined; or
the method further comprises: receiving seventh indication information, wherein the seventh indication information indicates the second step value.

12. The method according to claim 10 or 11, wherein the first configuration information further indicates a position of the fifth CG PUSCH, or a position of the fifth CG PUSCH is predefined.

13. The method according to any one of claims 1 to 12, wherein the first configuration information comprises eighth indication information, and the eighth indication information indicates time domain resource sizes of the M CG PUSCHs.

14. A terminal, wherein the terminal comprises a unit configured to perform the method according to any one of claims 1 to 13.

15. A computer-readable storage medium, wherein the computer-readable storage medium is configured to store a computer program, and when the computer program is run on a computer installed in a terminal, the terminal is enabled to perform the method according to any one of claims 1 to 13.

## Patentansprüche

1. Kommunikationsverfahren, wobei das Verfahren auf ein Endgerät angewendet wird und das Verfahren umfasst:
Empfangen von ersten Konfigurationsinformationen, wobei die ersten Konfigurationsinformationen verwendet werden, um M Configured Grant-Physical Uplink Shared Channels, CG-PUSCHs, in einer ersten CG-Periodizität zu konfigurieren, die M CG-PUSCHs einen ersten CG-PUSCH und einen zweiten CG-PUSCH umfassen, sich der erste CG-PUSCH in dem Zeitbereich vor dem zweiten CG-PUSCH befindet, eine Zeitbereichsressourcengröße des zweiten CG-PUSCH kleiner als eine Zeitbereichsressourcengröße des ersten CG-PUSCH ist und M eine ganze Zahl größer als oder gleich 2 ist; und
Senden von Daten auf N CG-PUSCHs, wobei N eine positive ganze Zahl kleiner oder gleich M ist.

2. Verfahren nach Anspruch 1, wobei eine Frequenzbereichsressourcengröße des zweiten CG-PUSCH kleiner als eine Frequenzbereichsressourcengröße des ersten CG-PUSCH ist.

3. Verfahren nach Anspruch 2, wobei die ersten Konfigurationsinformationen M Anzeigeinformationen umfassen, die M Anzeigeinformationen in einer Eins-zu-Eins-Entsprechung zu den M CG-PUSCHs stehen, die M Anzeigeinformationen erste Anzeigeinformationen und zweite Anzeigeinformationen umfassen, die ersten Anzeigeinformationen die Frequenzbereichsressourcengröße des ersten CG-PUSCH anzeigen und die zweiten Anzeigeinformationen die Frequenzbereichsressourcengröße des zweiten CG-PUSCH anzeigen.

4. Verfahren nach Anspruch 3, wobei die M CG-PUSCHs ferner einen dritten CG-PUSCH umfassen, der dritte CG-PUSCH in dem Zeitbereich vor dem zweiten CG-PUSCH angeordnet ist und eine Frequenzbereichsressourcengröße des dritten CG-PUSCH gleich der Frequenzbereichsressourcengröße des ersten CG-PUSCH ist.

5. Verfahren nach Anspruch 2, wobei eine Differenz zwischen der
Frequenzbereichsressourcengröße des ersten CG-PUSCH und der Frequenzbereichsressourcegröße des zweiten CG-PUSCH ein ganzzahliges Vielfaches eines ersten Schrittwerts ist; und
die ersten Konfigurationsinformationen ferner die Frequenzbereichsressourcengröße des ersten CG-PUSCH anzeigen.

6. Verfahren nach Anspruch 5, wobei
die ersten Konfigurationsinformationen ferner verwendet werden, um den ersten Schrittwert zu konfigurieren; oder
der erste Schrittwert vorgegeben ist; oder
das Verfahren ferner umfasst: Empfangen von dritten Anzeigeinformationen, wobei die dritten Anzeigeinformationen den ersten Schrittwert anzeigen.

7. Verfahren nach Anspruch 2, wobei die ersten Konfigurationsinformationen Q Anzeigeinformationen umfassen, die Q Anzeigeinformationen vierte Anzeigeinformationen und fünfte Anzeigeinformationen umfassen, die vierten Anzeigeinformationen die Frequenzbereichsressourcengröße des ersten CG-PUSCH anzeigen, die fünften Anzeigeinformationen die Frequenzbereichsressourcengröße des zweiten CG-PUSCH anzeigen, und Q eine ganze Zahl größer als oder gleich 2 und kleiner als oder gleich M ist; und
die M CG-PUSCHs ferner einen vierten CG-PUSCH umfassen, der vierte CG-PUSCH sich in dem Zeitbereich zwischen dem ersten CG-PUSCH und dem zweiten CG-PUSCH befindet, und die ersten Konfigurationsinformationen ferner anzeigen, dass Frequenzbereichsressourcengrößen aller CG-PUSCHs, die sich in dem Zeitbereich vor dem vierten CG-PUSCH befinden, gleich der Frequenzbereichsressourcengröße des ersten CG-PUSCH sind, und Frequenzbereichsressourcengrößen aller CG-PUSCHs, die sich in dem Zeitbereich nach dem vierten CG-PUSCH befinden, gleich der Frequenzbereichsressourcengröße des zweiten CG-PUSCH sind.

8. Verfahren nach Anspruch 7, wobei eine Frequenzbereichsressourcengröße des vierten CG-PUSCH gleich der Frequenzbereichsressourcengröße des ersten CG-PUSCH ist, oder eine Frequenzbereichsressourcengröße des vierten CG-PUSCH gleich der Frequenzbereichsressourcengröße des zweiten CG-PUSCH ist.

9. Verfahren nach Anspruch 7 oder 8, wobei die ersten Konfigurationsinformationen ferner eine Position des vierten CG-PUSCH anzeigen, oder eine Position des vierten CG-PUSCH vorgegeben ist.

10. Verfahren nach Anspruch 2, wobei die ersten Konfigurationsinformationen sechste Anzeigeinformationen umfassen, und die sechsten Anzeigeinformationen die Frequenzbereichsressourcengröße des ersten CG-PUSCH anzeigen; und
die M CG-PUSCHs ferner einen fünften CG-PUSCH umfassen, wobei sich der fünfte CG-PUSCH in dem Zeitbereich zwischen dem ersten CG-PUSCH und dem zweiten CG-PUSCH befindet, und die ersten Konfigurationsinformationen ferner anzeigen, dass Frequenzbereichsressourcengrößen aller CG-PUSCHs, die sich in dem Zeitbereich vor dem fünften CG-PUSCH befinden, gleich der Frequenzbereichsressourcengröße des ersten CG-PUSCH sind, und eine Differenz zwischen Frequenzbereichsressourcengrößen aller CG-PUSCHs, die sich in dem Zeitbereich nach dem fünften CG-PUSCH befinden, ein ganzzahliges Vielfaches eines zweiten Schrittwerts ist.

11. Verfahren nach Anspruch 10, wobei die ersten Konfigurationsinformationen ferner den zweiten Schrittwert anzeigen; oder der zweite Schrittwert vorgegeben ist; oder
das Verfahren ferner umfasst: Empfangen von siebenten Anzeigeinformationen, wobei die siebenten Anzeigeinformationen den zweiten Schrittwert anzeigen.

12. Verfahren nach Anspruch 10 oder 11, wobei die ersten Konfigurationsinformationen ferner eine Position des fünften CG-PUSCH anzeigen oder eine Position des fünften CG-PUSCH vorgegeben ist.

13. Verfahren nach einem der Ansprüche 1 bis 12, wobei die ersten Konfigurationsinformationen achte Anzeigeinformationen umfassen und die achten Anzeigeinformationen Zeitbereichsressourcengrößen der M CG-PUSCHs anzeigen.

14. Endgerät, wobei das Endgerät eine Einheit umfasst, die konfiguriert ist, um das Verfahren nach einem der Ansprüche 1 bis 13 durchzuführen.

15. Computerlesbares Speichermedium, wobei das computerlesbare Speichermedium konfiguriert ist, um ein Computerprogramm zu speichern, und sobald das Computerprogramm auf einem in einem Endgerät installierten Computer laufen gelassen wird, das Endgerät aktiviert wird, um das Verfahren nach einem der Ansprüche 1 bis 13 durchzuführen.

## Revendications

1. Procédé de communication, dans lequel le procédé est appliqué à un dispositif terminal, et le procédé comprend :
la réception de premières informations de configuration, dans lequel les premières informations de configuration sont utilisées pour configurer M canaux partagés de liaison montante physiques, PUSCH, d'autorisation configurée, CG, dans une première périodicité CG, les M PUSCH CG comprennent un premier PUSCH CG et un deuxième PUSCH CG, le premier PUSCH CG est situé avant le deuxième PUSCH CG dans un domaine temporel, une taille de ressource de domaine temporel du deuxième PUSCH CG est inférieure à une taille de ressource de domaine temporel du premier PUSCH CG, et M est un nombre entier supérieur ou égal à 2 ; et
l'envoi de données sur N PUSCH CG, dans lequel N est un nombre entier positif inférieur ou égal à M.

2. Procédé selon la revendication 1, dans lequel une taille de ressource de domaine fréquentiel du deuxième PUSCH CG est inférieure à une taille de ressource de domaine fréquentiel du premier PUSCH CG.

3. Procédé selon la revendication 2, dans lequel les premières informations de configuration comprennent M éléments d'informations d'indication, les M éléments d'informations d'indication sont en correspondance biunivoque avec les M PUSCH CG, les M éléments d'informations d'indication comprennent des premières informations d'indication et des deuxièmes informations d'indication, les premières informations d'indication indiquent la taille de ressource de domaine fréquentiel du premier PUSCH CG, et les deuxièmes informations d'indication indiquent la taille de ressource de domaine fréquentiel du deuxième PUSCH CG.

4. Procédé selon la revendication 3, dans lequel les M PUSCH CG comprennent en outre un troisième PUSCH CG, le troisième PUSCH CG est situé avant le deuxième PUSCH CG dans le domaine temporel, et une taille de ressource de domaine fréquentiel du troisième PUSCH CG est égale à la taille de ressource de domaine fréquentiel du premier PUSCH CG.

5. Procédé selon la revendication 2, dans lequel une différence entre la taille de ressource de domaine fréquentiel du premier PUSCH CG et la taille de ressource de domaine fréquentiel du deuxième PUSCH CG est un multiple entier d'une première valeur de pas ; et
les premières informations de configuration indiquent en outre la taille de ressource de domaine fréquentiel du premier PUSCH CG.

6. Procédé selon la revendication 5, dans lequel
les premières informations de configuration sont en outre utilisées pour configurer la première valeur de pas ; ou
la première valeur de pas est prédéfinie ; ou
le procédé comprend en outre : la réception de troisièmes informations d'indication, dans lequel les troisièmes informations d'indication indiquent la première valeur de pas.

7. Procédé selon la revendication 2, dans lequel les premières informations de configuration comprennent Q éléments d'informations d'indication, les Q éléments d'informations d'indication comprennent des quatrièmes informations d'indication et des cinquièmes informations d'indication, les quatrièmes informations d'indication indiquent la taille de ressource de domaine fréquentiel du premier PUSCH CG, les cinquièmes informations d'indication indiquent la taille de ressource de domaine fréquentiel du deuxième PUSCH CG, et Q est un nombre entier supérieur ou égal à 2 et inférieur ou égal à M ; et
les M PUSCH CG comprennent en outre un quatrième PUSCH CG, le quatrième PUSCH CG est situé entre le premier PUSCH CG et le deuxième PUSCH CG dans le domaine temporel, et les premières informations de configuration indiquent en outre que des tailles de ressource de domaine fréquentiel de tous les PUSCH CG situés avant le quatrième PUSCH CG dans le domaine temporel sont identiques à la taille de ressource de domaine fréquentiel du premier PUSCH CG, et des tailles de ressource de domaine fréquentiel de tous les PUSCH CG situés après le quatrième PUSCH CG dans le domaine temporel sont identiques à la taille de ressource de domaine fréquentiel du deuxième PUSCH CG.

8. Procédé selon la revendication 7, dans lequel une taille de ressource de domaine fréquentiel du quatrième PUSCH CG est identique à la taille de ressource de domaine fréquentiel du premier PUSCH CG, ou une taille de ressource de domaine fréquentiel du quatrième PUSCH CG est identique à la taille de ressource de domaine fréquentiel du deuxième PUSCH CG.

9. Procédé selon la revendication 7 ou 8, dans lequel les premières informations de configuration indiquent en outre une position du quatrième PUSCH CG, ou une position du quatrième PUSCH CG est prédéfinie.

10. Procédé selon la revendication 2, dans lequel les premières informations de configuration comprennent des sixièmes informations d'indication, et les sixièmes informations d'indication indiquent la taille de ressource de domaine fréquentiel du premier PUSCH CG ; et
les M PUSCH CG comprennent en outre un cinquième PUSCH CG, le cinquième PUSCH CG est situé entre le premier PUSCH CG et le deuxième PUSCH CG dans le domaine temporel, et les premières informations de configuration indiquent en outre que des tailles de ressource de domaine fréquentiel de tous les PUSCH CG situés avant le cinquième PUSCH CG dans le domaine temporel sont identiques à la taille de ressource de domaine fréquentiel du premier PUSCH CG, et une différence entre des tailles de ressource de domaine fréquentiel de tous les PUSCH CG situés après le cinquième PUSCH CG dans le domaine temporel est un multiple entier d'une seconde valeur de pas.

11. Procédé selon la revendication 10, dans lequel les premières informations de configuration indiquent en outre la seconde valeur de pas ; ou la seconde valeur de pas est prédéfinie ; ou
le procédé comprend en outre : la réception de septièmes informations d'indication, dans lequel les septièmes informations d'indication indiquent la seconde valeur de pas.

12. Procédé selon la revendication 10 ou 11, dans lequel les premières informations de configuration indiquent en outre une position du cinquième PUSCH CG, ou une position du cinquième PUSCH CG est prédéfinie.

13. Procédé selon l'une quelconque des revendications 1 à 12, dans lequel les premières informations de configuration comprennent des huitièmes informations d'indication, et les huitièmes informations d'indication indiquent des tailles de ressource de domaine temporel des M PUSCH CG.

14. Terminal, dans lequel le terminal comprend une unité configurée pour réaliser le procédé selon l'une quelconque des revendications 1 à 13.

15. Support de stockage lisible par ordinateur, dans lequel le support de stockage lisible par ordinateur est configuré pour stocker un programme informatique, et lorsque le programme informatique est exécuté sur un ordinateur installé dans un terminal, le terminal est autorisé à réaliser le procédé selon l'une quelconque des revendications 1 à 13.
